# EUROPEAN PATENT SPECIFICATION

(11) **EP 1 008 430 B1**
(45) Date of publication and mention of the grant of the patent: **18.04.2007**
(21) Application number: 98901569.8
(22) Date of filing: 09.02.1998
(51) Int. Cl.: B29C 44/00, B60R 13/02, B29C 44/14, B29C 44/44

(54) **SKIN-CARRYING IN-MOLD EXPANDED MOLDED BODY MANUFACTURING METHOD AND THE MOLDED BODY**
VERFAHREN ZUM HERSTELLEN EINES EINE HAUT TRAGENDEN, IN EINER FORM EXPANDIERTEN GEFORMTEN KÖRPERS UND DER KöRPER
PROCEDE DE FABRICATION D'UN CORPS MOULE DILATE DANS UN MOULE SUPPORTANT LA PEAU et CORPS MOULE

(30) Priority: 10.02.1997 JP 2681297; 08.05.1997 JP 11833897
(43) Date of publication of application: 14.06.2000
(60) Divisional application: 06025720.1
(73) Proprietor: KANEKA CORPORATION, Osaka-shi, Osaka 530-0005 (JP)
(72) Inventor: MATSUKI, Kiyoshi, Nishinomiya-shi, Hyogo 663-8204 (JP); KAKIMOTO, Yoriki, Settsu-shi, Osaka 566-0072 (JP)
(74) Representative: Diehl & Partner
(86) International application number: PCT/JP1998/000536
(87) International publication number: WO 1998/034770

(56) References cited:
- EP-A- 0 603 498
- FR-A- 2 083 527
- FR-A- 2 439 525
- GB-A- 1 521 063
- JP-A- 62 108 039
- JP-U- 62 078 424
- US-A- 4 992 224

## Description

### TECHNICAL FIELD

This invention relates to a method for producing cellular a molded article in a mold pattern having a surface skin. Said article is used, for example, as an automobile interior trim material or the like. The invention also refers to said molded article.

### BACKGROUND OF THE INVENTION

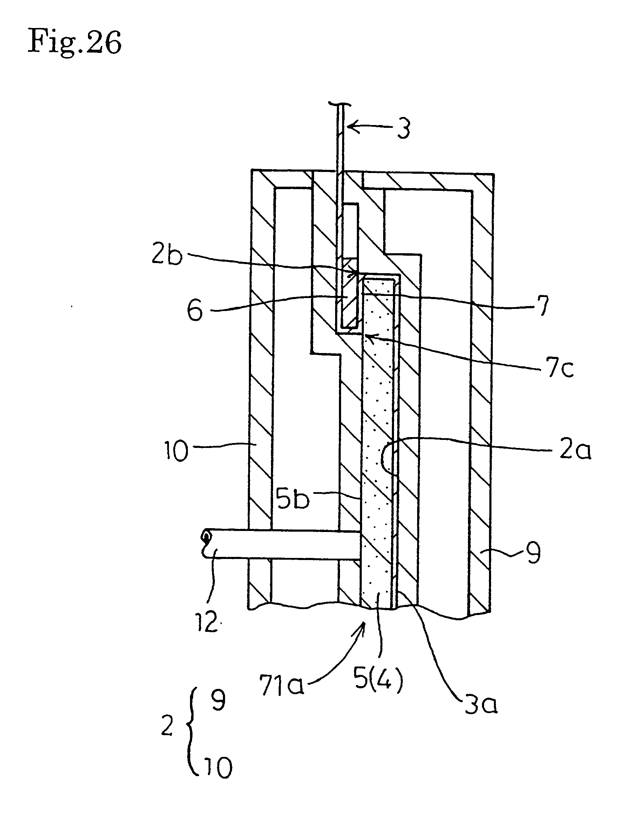

As for the conventional technique of this kind, for example,
(a) a so-called simultaneous molding with surface skin in once (simultaneous one piece molding) is known as disclosed in TOKUKAI-SHO 62-108039. In this method, as illustrated in Fig. 26, a male-female coupled mold pattern 2 is used, and after a surface skin material 3 is performed by vacuum-forming along a cavity surface 2a of a female pattern 9, an expansion molding is performed in the cavity (inside of the molding pattern) 4 which is shaped up by a male pattern 10 combined with a surface skin material 3, at the same time. The expanded molded article (expanded molded article in the mold pattern) 5 is united with the above-mentioned surface skin material 3 simultaneously. In this simultaneous molding method, when the above-mentioned surface skin material 3 is vacuum formed, the outer edge part of said surface skin material 3 is fold-back formed from an opening edge 2b toward the inside direction along a fold-back pattern (pattern for folding back) 6 which projects from the opening edge 2b of the above-mentioned cavity face 2a toward the inside direction in advances. When the above-mentioned expansion molding is performed, the folded back part 7 of the surface skin material 3 is united into one piece with the backside face 5b of the above-mentioned expanded molded article (expanded molded article in the mold pattern) 5.

In this method, at the time of the above-mentioned vacuum forming, the outer edge part of the surface skin material 3 is formed in advance and folded back from tip 7c of the fold back part 7 toward the outside direction in a manner of rolling up the folding pattern (pattern for folding back) 6, and an expansion molding is performed with this state. After having obtained an expanded molded article with surface skin material (expanded molded article in the mold pattern with a surface skin) 71a, it is removed from the pattern, and the unnecessary outer edge part of the surface skin material 3 is trimmed off at tip 7c of the above-mentioned fold back part 7.
(b) On the other hand, it is known an expanded molded article in a mold pattern with a surface skin in which an insert member is melt united with the outer edge part of the backside 5b of the expanded molded article 5. When the outer edge part of a surface skin material 3 is folded back to the back face 5b side of the expanded molded article in the mold pattern 5, a prescribed range of the outer edge part of the surface skin material 3 is cut off so as to avert the above-mentioned insert member. Thereafter, it is necessary that the folded back part 7 is adhered to the back face 5b of the expanded molded article in the mold pattern 5.
(c) Further more, in a simultaneous one piece molding as in the above, a chamber connected with a steam valve, decompression valve or the like is equipped in each of the two metal mold parts. One of the metal mold parts on which a surface skin material is placed is provided with a plurality of decompressing holes, and the other metal mold part is provided with a plurality of vapor holes connected with the above-mentioned chamber respectively. When expansion molding is performed, expanded beads filled in this mold pattern are heat-expanded by feeding steam from the vapor holes of the above-mentioned the metal mold part to the inside of the mold pattern.

In this case, for the purpose of an effective expansion molding by preheating of the above-mentioned surface skin material, it is common that the above-mentioned metal mold part is preheated by feeding steam into the inside of the above-mentioned chamber before the surface skin material is placed on.

Nevertheless, in the above-mentioned conventional example (a), since the outer edge part of the above-mentioned surface skin material 3 is in a state of standing from the tip 7c of the above-mentioned folded back part 7 at a prescribed angle against back face 5b of the expanded molded article (expanded molded article in the mold pattern) 5, when the above-mentioned outer edge part is trimmed off at tip 7c of the folding back part 7, a prescribed length of the projecting edge part may remain. In such a case, for transportation an assembling process or the like of the cellular molded article with the surface skin material the expanded molded article in the mold pattern. with a surface skin) is conducted, since the above-mentioned projecting edge part may often hang up with other members , and there is the problem of easily peeling from the tip 7c of the above-mentioned fold back part 7.

In the above-mentioned conventional example (b), since the trim process and the adhesion process for a prescribed range of the fold back part 7, which is necessary when an insert member material is melt united to one piece, need to be made by hand, there is the problem of requiring much labour.

More over, in the above-mentioned conventional example (c), when the above-mentioned one metal pattern part is preheated, whereby the metal pattern part is totally heated by feeding steam into the inside of its chamber, there is the problem of an insufficient heating efficiency. Furthermore, when the above-mentioned surface skin material is placed on by vacuum forming, even though the above-mentioned one metal pattern part has been preheated by steam, at a time of decompression the heat is taken away by vaporizing heat of condensed moisture within the chamber and there is the problem of lowering the temperature of the metal pattern part, by which an efficient vacuum forming will not be successful. Furthermore, when the metal pattern part is preheated directly by steam, moisture or water drops will remain on the surface of the metal pattern part. Consequently, since these water drops or the like stick on the surface of the skin material, there is the problem that the appearance of the surface skin material is deteriorated at the time when the surface skin material is placed on one metal pattern part by heat forming such as vacuum forming, and there is the problem of lowering its elongation property during heat forming.

British Patent 1521063 describes a method and an apparatus for manufacturing upholstered foamed articles with an integral upholstery material adhering to the material of the foam. At first, there is vacuum formed an upholstery material and subsequently there is foamed a synthetic material into contact with said upholstery material. Said method comprises the step of moving inwardly the upholstery material to thereby induce at least one fold therein to straighten out the remaining upholstery material before the material of the foam is hardened.

EP 0603498 A1 discloses a method for forming trim panels as upper and lower mold sections which performs a laminating between a substrate and a cover sheet, while simultaneously cooperating with a folding device to fold a sheet edge around a substrate rim to bond the sheet edge to the back of the substrate rim.

This invention has been done for solving the above-mentioned problems and to achieve the following advantages :
(1) The fold back part, which is folded back to the backside face of the expanded molded article in the mold pattern and is melt united to one piece, is hardly peeled off,
(2) less hand working is necessary, even when an insert member material is assembled,
(3) the expanded molding or the heat forming of the surface skin material can be done effectively,
(4) improving the surface property of the surface skin material and/or the elongation property at the heat forming,
(5) at the time of preheating a good heat efficiency of the metal pattern part, on which the surface skin material is placed, can be achieved.

The object of the invention is to provide a method for producing a cellular molded article in a mold pattern having a surface skin, and a molded article obtained thereby.

### DISCLOSURE OF THE INVENTION

The essential features residing in the method for producing a cellular molded article in a mold pattern having a surface skin of this invention are defined in present claim 1. Accordingly, the invention refers to a method for producing a cellular molded article with a surface skin in a mold pattern, wherein the surface skin material is melt united to one piece with a surface of an expanded molded article in a mold pattern, which expanded molded article is molded by expansion molding within said mold pattern, after the surface skin material is heat-formed along the cavity face of the mold pattern, characterized in that, when carrying out said heat-forming, after the outer edge part of said surface skin material is folded back to the inside direction and formed to a fold back part along a pattern for folding back which is arranged as an opening edge of the above-mentioned cavity face to project to the inside direction, and then the above-mentioned pattern for folding back is removed, thereafter at the time of said expansion molding one face of said fold back part is melt united to one piece with a back face of an expanded molded article in a mold pattern, as well as the fold returning part, which is in a state wherein the outer edge part of the surface skin material is folded back to the outside direction from the tip of said fold back part, is pressed so as to pile on the other face of said fold back part. Accordingly, an expanded molded article in a mold pattern having a surface skin can be produced in one serial process by using the above-mentioned mold pattern. Therefore, there is the advantage that the assembling process for folding back the surface skin material to the back face of the above-mentioned expanded molded article in the mold pattern is unnecessary. Furthermore, by applying the above-mentioned whole process, there is the other advantage that by pressing the above-mentioned fold returning part so as to be piled on the other face of the fold back part, the above-mentioned fold back part can be easily molded so that it is simply piled or melt adhered to one piece, in other words, it is in an approximately parallel position against the back face of the above-mentioned expanded molded article in the mold pattern. Moreover, in order to protect the surface appearance of the expanded molded article in the mold pattern having a surface skin, the outer edge part of the above-mentioned surface skin material may be trimmed off simply for making the tip of the fold returning part to be positioned at the inside direction from base edge of the fold back part. Therefore this trimming work is advantageously done easily and it is not necessary to take much care for it.

The essential feature as defined in claim 2 is that, when heat-molding, the above-mentioned fold returning part is pre-formed beforehand to a state that it is folded back to the outer direction in a manner of rolling up the pattern for folding back from the tip of the above-mentioned fold back part. Accordingly, only by clamping the above-mentioned mold pattern parts completely, the above-mentioned fold returning part can easily be pressed so as to be piled on the other face or the like of the fold back part. Therefore, when the above-mentioned expanded beads are filled into the mold pattern, hand-work involved for folding the outer edge part of the surface skin material, which will become the fold returning part, to return from the tip of the fold back part to the outer direction, can advantageously be omitted.

The essential feature as defined in claim 3 is that the outer part of the above-mentioned surface skin material is trimmed off beforehand so that the tip of the fold returning part is positioned inside the direction from the base edge of the fold back part. Accordingly, after the production of the expanded molded article in the mold pattern having a surface skin, the trimming work of the unnecessary outer edge part of the surface skin material is omitted, and also the above-mentioned fold returning part is melt united to one piece with the other face of the fold back part so that this fold back part will not be peeled out. These are also advantages.

The essential feature as defined in claim 4 is that the angle between the cavity face and the pattern for folding back at the above-mentioned opening edge is set up larger beforehand than the outer corner angle of the backside face of the above-mentioned expanded molded article in the mold pattern. Accordingly, at a time of heat-molding such as the above-mentioned vacuum forming, the angle between the fold back part of the surface skin material and the surface part at the above-mentioned opening edge can be made larger than that of the afore-mentioned conventional case. By this reason, when expanded beads are filled into the above-mentioned mold pattern, the expanded beads are more easily filled to the outer corner part of the back face of the above-mentioned expanded molded article in the mold pattern. Consequently, the expansion molding of the expanded molded article in the mold pattern advantageously can be done more uniformly.

The essential feature as defined in claim 5 is that, at a time of the above-mentioned expansion molding, an insert member is connected with at least one of the above-mentioned fold back part and the fold returning part. Accordingly, there is the advantage that a trimming process of folding the back part by hand-work and an adhesion process, which are used in the conventional process, are not necessary and thus the hand-working is reduced. Furthermore, even when said fold back part and said fold returning part are formed, the connecting position of the insert member is not limited to a specific position but advantageously can be connected with various positions in the vicinity of the outer edge part on the back face of the above-mentioned expanded molded article in the mold pattern.

The essential feature as defined in claim 6 is that, before the above-mentioned heat molding is done, a cut off part for setting up the insert member at the tip of the above-mentioned pattern for the folding back is prepared beforehand. Accordingly, the fold back part or the like can be formed with a prescribed space at the inside direction of this cut off part for setting up the insert member. Namely, when the insert member is connected with the backside of the expanded molded article in the mold pattern, the folding back of the surface skin material or the like can be done automatically in a manner of averting this insert member, and thus there is the advantage of less hand-working.

The essential feature as defined in claim 7 is that there is an expanded molded article in a mold pattern and a surface skin material, comprising a surface part which is melt united to one piece with the surface of the said expanded molded article in the mold pattern, a fold back part in which the edge part of said surface part is folded back toward the inside direction and of which one face is melt united to one piece with the backside of the above-mentioned expanded molded article in the mold pattern, and a fold returning part which is folded to return so as to pile on the other face of this fold back part from the tip of said fold back part to the outside direction and at the same time so that its tip is positioned in the inside direction from the base edge of the fold back part. Accordingly, when said expanded molded article having a surface skin is transported or assembled, the tip of the above-mentioned fold back part and the fold returning part hardly hang on any other member material or the like. Thus it is advantageous that the above-mentioned fold back part is hardly peeling out. In the above-mentioned piled arragement of the fold back part and the fold returning part, there is the advantage that the cushioning property and/or the reinforcing effect can be raised.

The essential feature as defined in claim 8 is that the above-mentioned fold returning part is melt united to one piece with the other face of the fold back part. Accordingly, the fold returning part is hardly peeling out, which is also advantageous.

The essential feature as defined in claim 9 is that an insert member is united with at least one of the above-mentioned fold back part and fold returning part. Accordingly, the strength of the united part of this insert member with the above-mentioned fold back part or the fold returning part is advantageously more increased.

The essential feature as defined in claim 10 is that the above-mentioned fold back part and the fold returning part are folded back and folded to return in a manner to avert the insert member which is melt united to one piece with the backside of the above-mentioned expanded molded article in the mold pattern. Accordingly, the above-mentioned insert member can be melt united as well in a manner that it is buried in the back face of said expanded molded article in the mold pattern, which is advantageous in that the assembling variation for the insert member can advantageously be broadened.

The essential feature as defined in claim 11 is that the above-mentioned surface skin material and the expanded molded article in the mold pattern consist of a polyolefin resin. Accordingly, melt uniting of such surface skin material with the expanded molded article is strong, and at the same time, there is the advantage in that its recycling is easy since it is a so-called all polyolefin.

The essential feature as defined in claim 12 is that the above-mentioned surface skin material, the expanded molded article in the mold pattern and the insert member consist of a polyolefin resin. Accordingly, in addition to the above as defined in claim 11, the melt uniting of the surface skin material or the expanded molded article in the mold pattern with the insert member is stronger and its recycling is easy as well, which is also advantageous.

### BRIEF DESCRIPTION OF THE DRAWINGS

Fig.1 is a cross-sectional drawing of a state wherein a mold pattern for folding back is placed on a female mold pattern in a method for producing an expanded molded article in a mold pattern which is relating to the embodiment of example 1.
Fig.2 is a plan view illustrating a placement state of the mold pattern for folding back in Fig. 1.
Fig.3 is a cross-sectional drawing illustrating a state of the vacuum-formed surface skin material described in Fig.1.
Fig.4 is a cross-sectional drawing illustrating a state of filling expanded beads to the inside of a mold pattern.
Fig.5 is a cross-sectional drawing illustrating a state of the expansion molding.
Fig.6 is a cross-sectional drawing illustrating a state of an expanded molded article in a mold pattern having a surface skin being removed from the mold pattern.
Fig.7 is a cross-sectional drawing illustrating a state after the unnecessary outer edge part of the surface skin material shown in Fig.6 has been trimmed off.
Fig.8 is a cross-sectional drawing illustrating a state of filling expanded beads being to the inside of the mold pattern in a method for producing an expanded molded article in a mold pattern having a surface skin which is relating to the embodiment of example 2.
Fig.9 is a cross-sectional drawing illustrating a state of expansion molding.
Fig. 10 is a cross-sectional drawing illustrating a state of an expanded molded article in a mold pattern having a surface skin being removed from the mold pattern.
Fig. 11 is a cross-sectional drawing illustrating a state of a surface skin material being vacuum-formed in a method for producing an expanded molded article in a mold pattern having a surface skin which is relating to the embodiment of example 3.
Fig.12 is a cross-sectional drawing illustrating a state of uniting an insert member with a fold back part when the expansion molding has been done, which is relating to a method for producing an expanded molded article in a mold pattern having a surface skin in the embodiment of example 4.
Fig. 13 is a cross-sectional drawing illustrating a state of an expanded molded article in a mold pattern having a surface skin being removed from the mold pattern.
Fig. 14 is a plan view illustrating the placement of a mold pattern for folding back, in which a trimmed space for assembling an insert member at the tip is set up in a method for producing an expanded molded article in a mold pattern having a surface skin, which is relating to the embodiment of example 5.
Fig. 15 is a cross-sectional drawing illustrating a state of a vacuum formed surface skin material.
Fig. 16 is a cross-sectional drawing illustrating a state of uniting to one piece of an insert member with the back face of an expanded molded article in a mold pattern to be formed when the expansion molding takes place.
Fig.17 is a cross-sectional drawing illustrating a state of an expanded molded article in a mold pattern having a surface skin being removed from the mold pattern.
Fig. 18 is a cross-sectional drawing illustrating a state of a surface skin material being placed on a female mold pattern by vacuum forming in a method for producing an expanded molded article in a mold pattern having a surface skin, which is relating to the embodiment of example 6.
Fig. 19 is a plan view of a female mold pattern in Fig. 18.
Fig.20 is a cross-sectional drawing illustrating a state of the vacuum-formed surface skin material in Fig.18.
Fig.21 is a cross-sectional drawing illustrating a state of the expanded beads being filled to the inside of a mold pattern.
Fig.22 is a cross-sectional drawing illustrating a state of an expansion molding taking place.
Fig.23 is a cross-sectional drawing illustrating an expanded molded article in a mold pattern having a surface skin with an edge part.
Fig.24 is a cross-sectional drawing of an expanded molded article in a mold pattern having a surface skin after the edge part having been trimmed off in Fig.23.
Fig.25 is a cross-sectional drawing illustrating a state of a vacuum-formed surface skin material in a method for producing an expanded molded article in a mold pattern having a surface skin, which is relating to the embodiment of example 7.
Fig.26 is a cross-sectional drawing illustrating a conventional example.

### BEST MODE FOR PRACTICING THE INVENTION

Embodiments of this invention are described below, based on the drawings, and when the same composition as the mentioned prior art comes out, its explanation is abbreviated by referring to previous wordings.

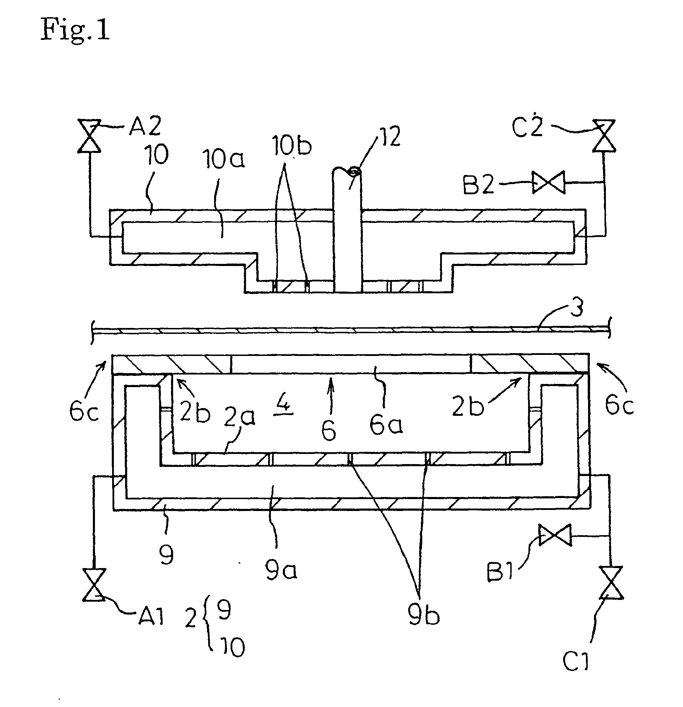

As illustrated in Fig.1 to Fig.7, a method for producing an expanded molded article in a mold pattern having a surface skin which is relating to the embodiment of example 1 comprises that, after a surface skin material 3 is heat-molded, such as by vacuum-forming, along cavity face 2a of a mold pattern 2, by expansion molding within this mold pattern 4, the above-mentioned surface skin material 3 is melt united to one piece with a surface 5a of an expanded molded article in the mold pattern 5 which is molded.

During the above-mentioned vacuum forming, after the outer edge part of the above-mentioned surface skin material 3 is folded back to the inside direction and is formed up a fold back part 7 along a mold pattern for folding back 6 which is placed as in a manner of projecting from an opening edge 2b of the above-mentioned cavity face 2a toward the inside direction, the above-mentioned mold pattern for folding back 6 is removed. Then, during the above-mentioned expansion molding one face 7a of the above-mentioned fold back part 7 is melt united to one piece with back face 5b of an expanded molded article in mold pattern 5, and at the same time, fold returning part 8, which is in a state that the outer edge part of the surface skin material 3 is folded returning toward the outside from tip 7c of this fold back part 7, is pressed so as to pile on the other face 7b of the above-mentioned fold back part 7.

Namely, as illustrated in Fig.1, at first, onto a female mold pattern 9 composing a lower mold pattern, for example, of the above-mentioned mold pattern 2, the above-mentioned mold pattern for folding back 6 is set up in a manner of projecting a prescribed length toward the inside direction from the opening edge 2b of the cavity face 2a.

In this stage, the above-mentioned mold pattern 2 is, for example, composed of the above-mentioned female mold pattern 9 and the male mold pattern 10 which are able to clamp and open the mold patterns in the up-down direction, and at the same time, the female mold pattern 9 is a lower mold pattern and the male mold pattern 10 is an upper mold pattern. With the above-mentioned female mold pattern 9, for example, its horizontal cross-sectional face is has a concave shape and a chamber 9a is formed in its inside, and a plurality of decompression holes 9b connecting through to the above-mentioned chamber 9a are formed on its cavity face 2a side. A vapor valve A1, a decompression valve B1 and a drain valve C1 are connected with the above-mentioned chamber 9a respectively. With the above-mentioned male mold pattern 10, for example, its horizontal cross-sectional face has a convex shape and a chamber 10a is formed in its inside, and for example, a plurality of vapor holes 10b connecting through to the above-mentioned chamber 10a are formed on its projected part. A vapor valve A2, a decompression valve B2 and a drain valve C2 are connected with the above-mentioned chamber 10a respectively, and a feeder 12 for feeding expanded beads 11 into the above-mentioned mold pattern is also set up.

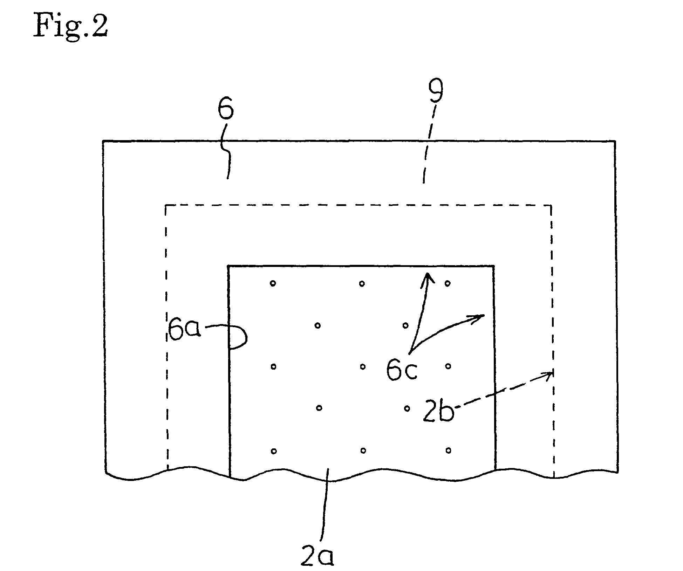

The above-mentioned mold pattern for folding back 6 is, for example as illustrated in Fig.1 and Fig.2 and is formed to a rectangle shape having a rectangle opening part 6a in plan view toward the inside direction and is able to remove toward the outside direction by dividing into a plurality of pieces at a prescribed position (not shown). When this mold pattern for folding back 6 is placed on the above-mentioned female mold pattern 9 by placing-on, magnetic connecting or the like, it projects from the opening edge 2b of the above-mentioned cavity face 2a toward the inside direction with a prescribed length. In addition to it, this mold pattern for folding back 6 may divide into a plurality of pieces, and also, may slide freely on the in-out direction respectively by applying a cylinder or the like for placing it on and removing it out.

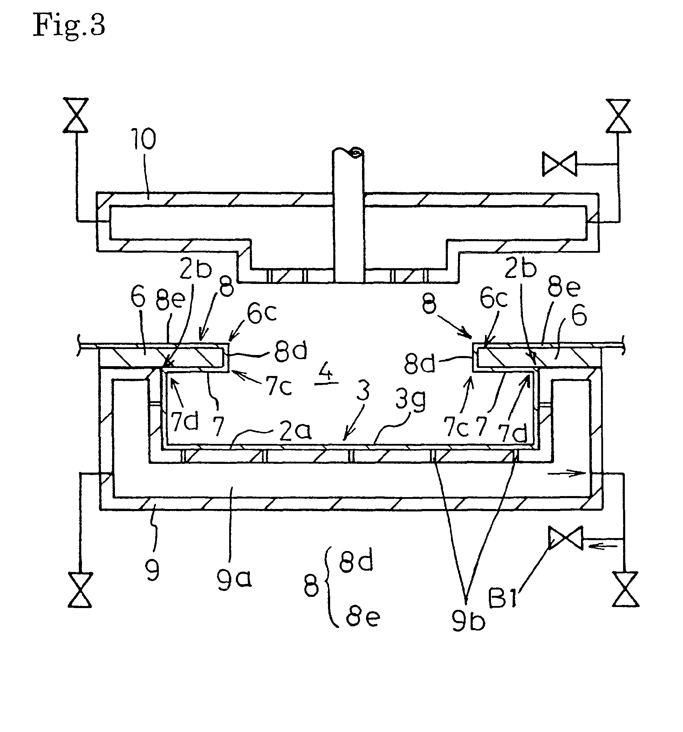

Next, as illustrated in Fig.3, the above-mentioned surface skin material 3, which is prepared to be in a heat-softened state beforehand, is placed on a mold pattern for folding back 6, and by opening a decompression valve B1 which is connected with the chamber 9a of the above-mentioned female mold pattern 9, by making the surface skin material 3 fit along the above-mentioned cavity face 2a such as by vacuum forming, the outer part of this surface skin material 3 is formed to a shape with fold back part 7 by folding back toward the inside direction along the above-mentioned mold pattern for folding back 6, and at the same time, fold returning part 8 is also formed by fold returning toward the outer direction from tip 7c of this fold back part 7 in a manner of rolling up the mold pattern for folding back 6. Furthermore, in this state by heating up the above-mentioned female mold pattern 9 and/or the mold pattern for folding back 6 to a prescribed temperature in advance, the heat molding of surface skin material 3 can advantageously be done more effectively.

In this state, if tip 6c of the above-mentioned mold pattern for folding back 6 was prepared as in this embodiment to a rectangle of its horizontal cross-sectional face shape, the above-mentioned fold returning part 8 is composed of a vertical piece 8d which is folded by bending it toward the upper direction from tip 7c of the above-mentioned fold back part 7, and a horizontal piece 8e which is folded by bending toward the outer direction from the upper tip of said vertical piece 8d. The horizontal cross-sectional shape of tip 6c of the above-mentioned mold pattern for folding back 6 can have a triangle shape, a trapezoid shape, a round shape or an oval shape besides a rectangle shape.

As examples of the above-mentioned surface skin material 3, a thermoplastic resin sheet including a vinyl chloride resin or a polyolefin resin such as a polyethylene resin or a polypropylene resin can be mentioned among others. And since this surface skin material is used as a surface skin of the cellular molded article having a surface skin 1, this surface skin material may be colored with a desired color by a coloring toner or the like according to the application.

The method for heat molding said surface skin material along the above-mentioned cavity face 2a, it is not limited to vacuum forming like in this embodiment, but any other molding such as compression molding can also be applied. If compression molding is applied, when the above-mentioned surface skin material 3 is heat-molded along the cavity face 2, it can be formed only of said fold back part 7 without forming the above-mentioned fold returning part 8.

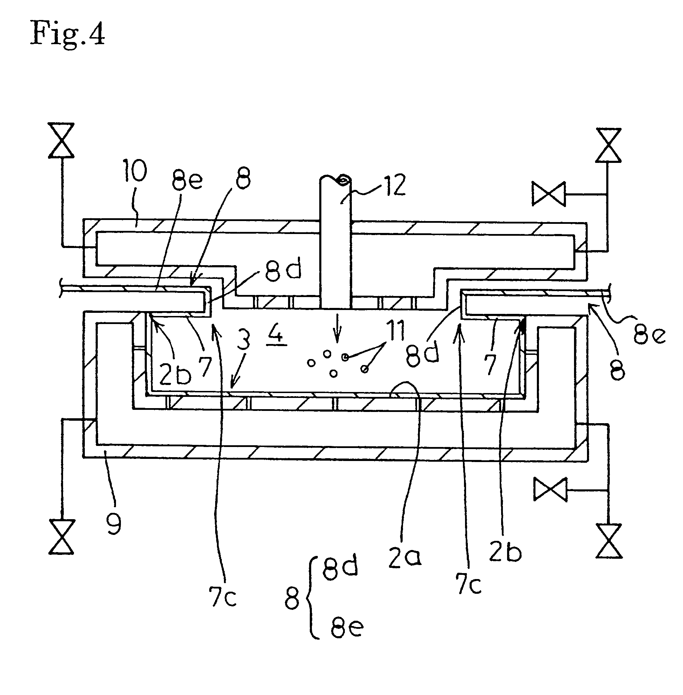

Next, as illustrated in Fig.4, after the above-mentioned mold pattern for folding back 6 is removed toward the outside direction by pulling it out for example, the metal mold pattern is clamped and then expanded beads 11 are filled into the inside of mold pattern 4 from the above-mentioned feeder 12.

In this stage, in order to evacuate the air from the above-mentioned mold pattern 4 and also in order to avoid that fold back part 7 of the above-mentioned surface skin material 3 is folded downward, clamping is preferably made in a state of having a small open space in between (cracking state). And, as is stated above, when the above-mentioned surface skin material 3 is heat-molded along cavity face 2a, in a case of forming only the fold back part without forming the above-mentioned fold returning part 8, clamping is preferably made in a manner that the outer edge part of the surface skin material 3, which will become the fold returning part 8, is folded returning toward the outer direction from tip 7c of fold returning part 7.

As examples of the synthetic resin comprising the above-mentioned expanded beads 11, a polyolefin resin and a polystyrene resin can be mentioned among others.

As examples of the above-mentioned polyolefin resin, polyethylene resin or polypropylene resin such as low density polyethylene, middle density polyethylene, high density polyethylene, linear low density polyethylene, ethylene-vinyl acetate copolymer, propylene homopolymer, ethylene-propylene random copolymer, ethylene-propylene block copolymer, ethylene-propylene-butene random terpolymer, propylene-vinyl chloride copolymer, propylene-butene copolymer, propylene-maleic anhydride copolymer, and poly (butene-1) can be mentioned among others, and these can be used alone or as a mixture of not less than two.

The polyolefin resin is preferably not cross-linked. However, it may be cross-linked by using peroxide, radiation or the like.

Furthermore, a mixture of this polyolefin resin with another thermoplastic resin can be used. As examples of these thermoplastic resins, being mixed with the above-mentioned polypropylene resin, a low density polyethylene, linear low density polyethylene, vinyl aromatic polymer, polybutene, and a ionomer can be mentioned among others. For mixing with the above-mentioned polyethylene resin, for example, a vinyl aromatic polymer, polybutene, and a ionomer can be mentioned among others. The amount of the thermoplastic resin to be mixed in these cases is preferably not more than 20 parts by weight based on 100 parts by weight of the polypropylene resin, more preferably 5 to 10 parts by weight.

The above-mentioned expanded beads 11 may be produced, for example, to be pre-expanded by a method in which the above-mentioned synthetic resin is processed to form a particle shape in advance, is impregnated with a volatile blowing agent in a pressure vessel, is stirred while dispersed in water, is heated up under pressure to a prescribed expansion temperature. Then this water dispersion is released into a low pressure region or the like.

As for the expansion ratio at which the beads 11 are expanded in the mold pattern, in a case of less than 3 times, the cushioning property or the like may be lowered, and in case of more than 60 times, the shrinkage of the above-mentioned expanded molded article in the mold pattern may be increased and at the same time it may have a tendency of lowering its strength due to be excessively softened. Therefore, 3 to 60 times of the expansion ratio is preferable, more preferably 5 to 50 times, even more preferably 8 to 45 times, and most preferably 10 to 35 times. As such expansion beads, for example, EPERAN-PP (trade name ; made by KANEKA CORPORATION, expansion ratio is 15 times) can be suitably used among others.

In these occasions, the above-mentioned expanded beads may be filled into the above-mentioned mold pattern 4 in a state of being imparted with an inner pressure by spreading a pressurized gas in advance, or may be filled into it in a compressed state by using a pressurized gas, or may also be filled into it without such inner pressure or being compressed.

On the other hand, in order to improve the adhesion property of the expanded molded article to be obtained by expansion molding in the mold pattern 5 of the expanded beads 11 with the above-mentioned surface skin material 3, if necessary, an adhesive may be coated in advance on back face 3g of this surface skin material 3 which will contact the above-mentioned expanded beads 11 and on one face 7a, which face downward, of the above-mentioned fold back part 7. As such adhesives, for example, an organic solvent solution of a synthetic resin, a resin emulsion and a resin powder can be mentioned among others. And as such resins, for example, a polyolefin resin such as an ethylene-vinylacetate resin, polypropylene, polyethylene, ethylene-propylene copolymer, chlorinated polypropylene, chlorinated polyethylene, ethylene-propylene-butene terpolymer, a mixture of these or the like can be mentioned among others.

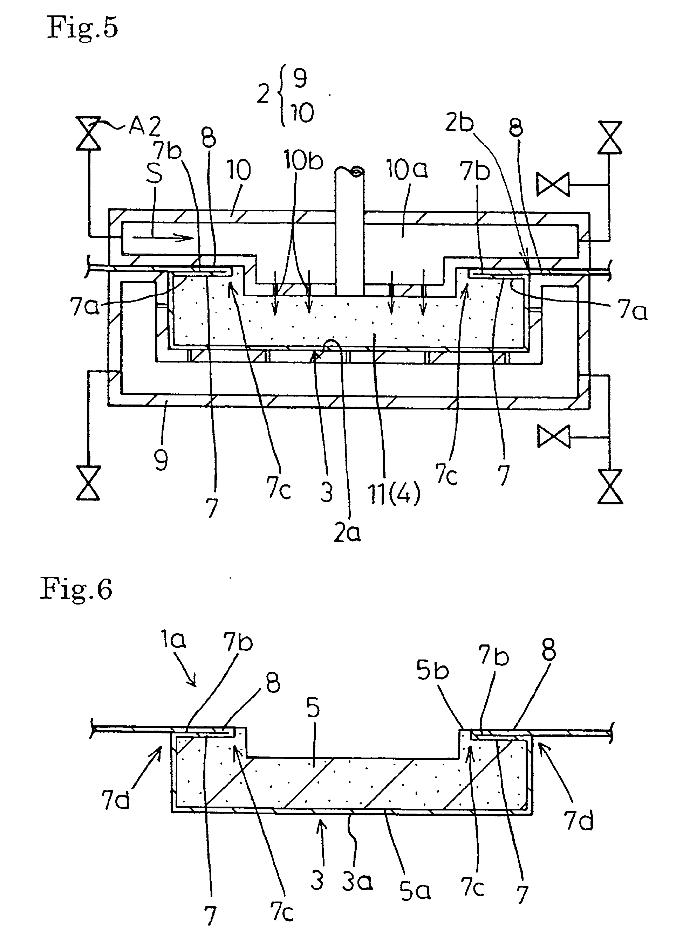

Next, as illustrated in Fig.5, after clamping said mold pattern together, vapor valve A2 which is connected with chamber 10a of the above-mentioned male mold pattern 10 is opened and steam S is supplied into the inside of the mold pattern 4 through the above-mentioned vapor holes 10b, and thus the above-mentioned expanded beads are heat-expanded.

When the above-mentioned expanded beads 11 are heat-expanded, in order not to cause any insufficient melt uniting, if necessary, pre-heating at a lower temperature than the temperature for melt uniting of said beads with each other may be done by steam S. Removal of drain by vacuum or the like after said steaming may also be done in advance.

The complete clamping of the mold pattern is preferably done at a time when the above-mentioned expanded beads 11 are almost completely filled into the mold pattern 4. Then the expanded beads 11 are preferably filled into the pattern 4 completely. By such means, since the above-mentioned fold back part 7 will not be folded downward by the support of the fully expanded beads 11 which are filled into the mold pattern 4, after the above-mentioned expansion molding the formation of voids between this fold back part 7 and the above-mentioned fold returning part 8 can advantageously be avoided.

The vertical portion 8d of the above-mentioned fold returning part 8 will be bent toward the outer direction from tip 7c of the above-mentioned fold back part 7 and will be pressed on the other face 7b of this fold back part 7 for being piled up. The above-mentioned horizontal portion 8e will be pressed onto the other face 7b and onto the female pattern 9 for being piled up. Then, since the expanded beads 11 are heat-expanded at this state, the surface skin material 3 will be melt united to one piece with surface 5a of the expanded molded article in mold pattern 5 which will be formed, and simultaneously one face 7a of the above-mentioned fold back part 7 will be melt united to one piece with the back face 5b of the expanded molded article in mold pattern 5. In addition, the above-mentioned fold returning part 8 will be pressed as is above-mentioned and simultaneously will be formed so as to be piled simply on the other face 7b of fold back part 7 or to be melt united to one piece therewith. As mentioned above, fold returning part 8 may be simply bent, or may be melt united to one piece with the other face 7b of the above-mentioned fold back part 7 according to the property of the above-mentioned surface skin material 3, the condition of temperature or the like.

Next, after cooling as it is necessary, by opening the above-mentioned mold pattern 2 and removing from it, as is illustrated in Fig.6, there can be obtained the cellular molded article in the mold pattern having a surface skin 1a, which comprises the obtained expanded molded article in mold pattern 5 by expansion molding of the above-mentioned expanded beads 11 and the surface skin material 3, which comprises the surface skin part 3a which is melt united to one piece with surface 5a of the said expanded molded article in mold pattern 5, a fold back part 7 in which the edge part of said surface part 3a is folded back toward the inside direction and of which one face is melt united to one piece with the backside of the above-mentioned expanded molded article in mold pattern 5, and the fold returning part 8 which is folded returning to being piled on the other face 7b of this fold back part 7 from tip 7c of said fold back part 7 to outside direction.

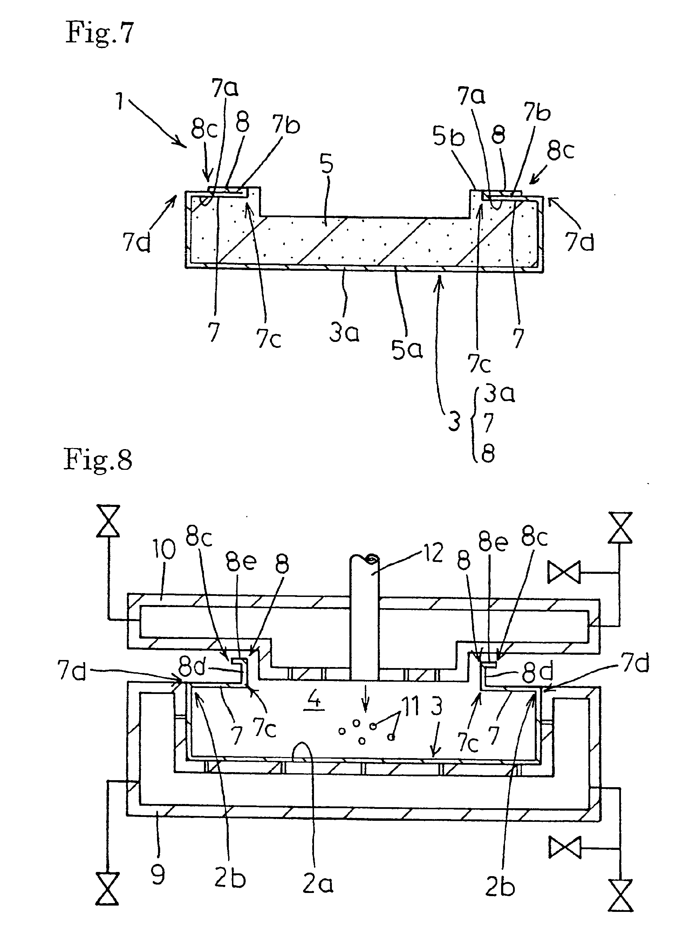

In order not to deteriorate the appearance, the unnecessary outer edge part of surface skin material 3 is trimmed off. Tip 8c of the above-mentioned fold returning part 8 is trimmed off at an appropriate site for positioning it at the inside direction from the base edge 7d of the fold back part 7, namely the edge of the above-mentioned surface part 3a, and an expanded molded article in the mold pattern having a surface skin can be obtained as is illustrated in Fig.7. Consequently, in order to trim off, the above-mentioned fold returning part 8 is preferably formed to a state wherein it is not melt united to one piece with the other face 7b of fold back part 7 but is simply bent to pile on.

Since an expanded molded article in a mold pattern having a surface skin 1 being composed as mentioned above can be produced in one serial process by applying the above-mentioned mold pattern 2, the folding back and adhesion processes of surface skin material 3 with the back face 5b of the above-mentioned expanded molded article in mold pattern 5 by hand-works can advantageously omitted. By the above-mentioned serial process, the above-mentioned fold returning part 8 can easily be formed so as to pile on the other face 7b of fold back part 7, namely, to be approximately in parallel to back face 5b of the above-mentioned expanded molded article in mold pattern 5, which is advantageous.

Accordingly, when the expanded molded article in the mold pattern having a surface skin 1 is transported or assembled, tip 7c of the above-mentioned fold back part 7 and fold returning part 8 hardly hung on another member material or the like and thus it is advantageous that the above-mentioned fold back part 7 hardly peels off. On the other hand, in order not to deteriorate the appearance of the above-mentioned surface part 3a on the expanded molded article in the mold pattern having a surface skin 1, since the outer edge part of the above-mentioned surface skin material 3 is simply trimmed off so that tip 8c of the fold returning part 8 is positioned at the inner direction from the base edge 7d of fold back part 7, this trimming work is easily done without particular caution, which is advantageous. On top of that, there is the advantage that the cushioning property and the reinforcing effect are improved in the piled portion of the above-mentioned fold returning part 8 with the fold back part 7.

In this embodiment, when the above-mentioned fold returning part 8 is heat-molded such as by vacuum forming, it is formed to be folded returning toward the outside direction to be rolled up said pattern for folding back 6 from tip 7c of the above-mentioned fold back part 7 in advance, as is mentioned above. Since this fold returning part 8 can easily be pressed onto the other face or the like of fold back part 7 so as to be piled up, when the above-mentioned expanded beads 11 are filled into the inside of mold pattern 4, hand-works for the fold returning of the outer edge part of the surface skin material 3 which will become fold returning part 8 toward the outside direction from tip 7c of fold back part 7 can be omitted advantageously.

If the above-mentioned surface skin material 3 and the expanded molded article in mold pattern 5 in said expanded molded article in the mold pattern having the surface skin 1 are composed of polyolefin resin, the melt uniting of these surface skin material 3 with the expanded molded article in mold pattern 5 can be made harder, and at the same time, as it is a so-called all olefin, recycling of it can be easier, which is also advantage.

As illustrated in Fig.8 to Fig.10, a method for producing an expanded molded article in a mold pattern having a surface skin 21 which relates to the embodiment of example 2 is, in the above-mentioned embodiment of example 1, before the expansion molding. The outer edge part of the above-mentioned surface skin material 3 is trimmed off in advance so that tip 8c of fold returning part 8 is positioned at inwardly from the base edge 7d of fold back part 7 at the time of the above-mentioned pressing.

As regards the trimming off before the above-mentioned expansion molding, the case of trimming off in advance before the heat-molding such as the above-mentioned vacuum forming, the case of trimming off simultaneously with this heat-molding, and a case of trimming off between after the heat-molding and before filling the above-mentioned expanded beads 11 into the inside of said mold pattern 4 are included. Among these, as a method for a simultaneous trimming off with heat-molding, there can be mentioned, for example, a method wherein a trimming blade projecting downward at a prescribed site of the above-mentioned male mold pattern 10 is mounted on, and at the same time, a concave fitting part which fits to this trimming blade is mounted on the upper face of the above-mentioned mold pattern for folding back 6 in advance, and by clamping said mold patterns at the time of the above-mentioned heat-molding, the outer edge part of surface skin material 3 is trimmed off. There can also be mentioned a method wherein on the above-mentioned male mold pattern 10, a projecting part for pressing the tip of which has an obtuse angle is mounted. When clamping said mold patterns at the above-mentioned heat-molding, a prescribed site of surface skin material 3 is pressed harder than the surrounding portion, and thus, said site is heat-molded to be thinner than the other portion in advance, thereafter said outer edge part can easily be trimmed off by a light drawing force. Furthermore, by this measure holes in form of a dotted-line are made on a prescribed site of the above-mentioned surface skin material 3. A trimming line for peeling off (machining line) can also be formed in advance.

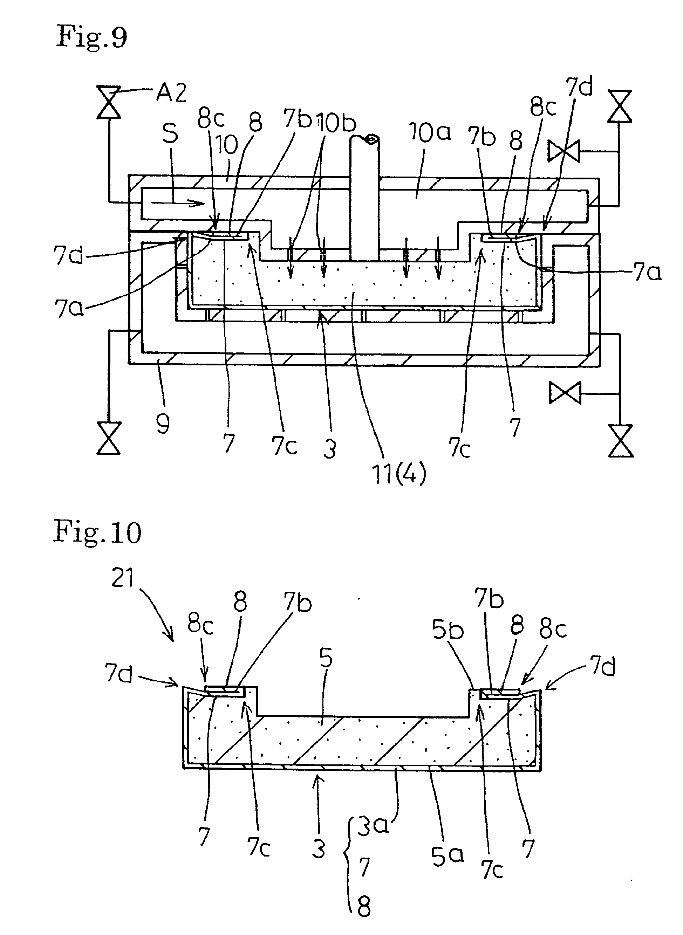

As mentioned above, if tip 8c of the fold returning part 8 is positioned at the inward direction from the base edge 7d of fold back part 7, at a time after the production of the expanded molded article in the mold pattern having a surface skin 21, since the trimming-off of the unnecessary outer edge portion of the surface skin material 3 can be omitted, the above-mentioned fold returning part 8 can be melt united to one piece with the other face 7b of the fold back part 7 so that it will not be peeled out, which is advantageous as well. In addition, as illustrated in Fig.9 and Fig.10, the above-mentioned fold back part 7 which is shortened by trimming off as mentioned, compared with the above-mentioned embodiment of example 1, may be pressed by the above-mentioned fold returning part 8 and may be folded into a more or less downward direction.

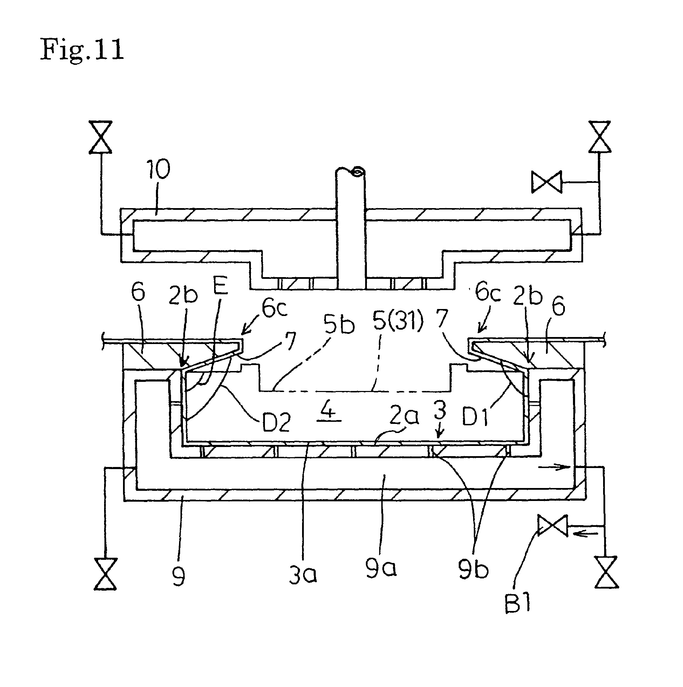

As illustrated in Fig.11, a method for producing an expanded molded article in a mold pattern having a surface skin 31 which relates to the embodiment of example 3 resides, in the above-mentioned embodiment of example 1 or 2, in that the angle D1 at the above-mentioned opening edge 2b, which is formed by the cavity face 2a and the mold pattern for folding back 6, is set larger in advance than the outer corner angle E of back face 5b of the above-mentioned expanded molded article in mold pattern 5.

By this means, at the above-mentioned heat-molding such as the vacuum forming, angle D2 at the above-mentioned opening edge 2b, which is formed by fold back part 7 of surface skin material 3 and surface part 3a, can be made larger than that of the conventional case which is illustrated in above-mentioned Fig.4 or Fig.8. By this reason, when the expended beads 11 are filled into the inside of the above-mentioned mold pattern 4, the expanded beads 11 can easily be filled also into a portion which will become the outer corner part of back face 5b of the above-mentioned expanded molded article in mold pattern 5, and thus there is the advantage of making said expansion molding of the expanded molded article in the mold pattern to be uniform.

On this occasion, the filling of the above-mentioned expanded beads 11 may be done as mentioned above. However, when the clamping of said mold pattern is complete, the filling may be done such that the above-mentioned fold back part 7 is bent up to a prescribed downward site, and then the full filling of the mold pattern 4 may be done.

Besides, in order to enlarge the angle D1 which is formed by cavity face 2a at the above-mentioned opening edge 2b and the mold pattern for the folding back 6, for example, as is illustrated in this embodiment, the horizontal cross-sectional shape of the above-mentioned mold pattern for folding back 6 may be inverted to a trapezoid shape or the like, or the above-mentioned mold pattern for folding back 6 may be positioned so that its tip 6c side inclines at a forward oblique upper direction toward the inside direction.

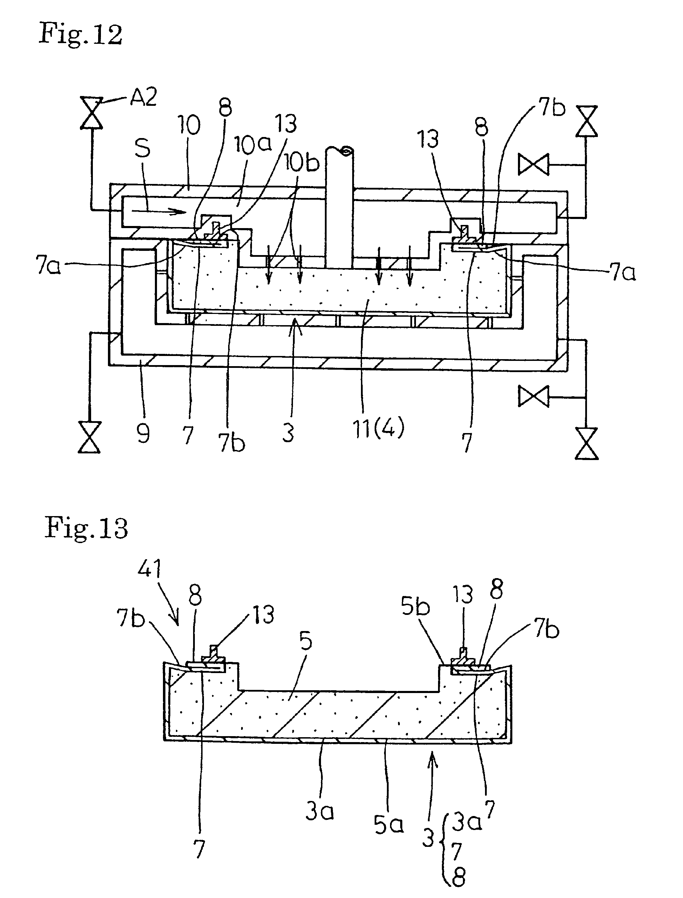

As illustrated in Fig. 12 and Fig.13, a method for producing an expanded molded article in a mold pattern having a surface skin 41 which relates to the embodiment of example 4 resides, in the above-mentioned embodiment of example 2, in that at the time of the above-mentioned expansion molding, for example, the insert member 13 is connected with the above-mentioned fold returning part 8.

In this case, before heat-molding by the above-mentioned vacuum forming or the like, or before filling of the above-mentioned expanded beads 11, the insert member 13 is placed on a prescribed site of the above-mentioned male mold pattern 10 in advance, and thereafter, when the expansion molding takes place that is when the expansion molding in the mold pattern of the above-mentioned expanded beads 11 occurs, this insert member 13 may be connected with the above-mentioned fold returning part 8 or the like by adhesion or by melt uniting to one piece.

The site where this insert member 13 is connected with, it is not limited only to the above-mentioned fold returning part 8, it may also be on the above-mentioned fold back part 7 or on both the fold returning part 8 and the fold back part 7 together. It may also be melt united to one piece in a manner of extending to back face 5b of the above-mentioned expanded molded article in the mold pattern 5. When the insert member 13 is connected only with the above-mentioned fold returning part 8, as mentioned above, it is preferably melt united to one piece with the above-mentioned fold back part 7 so as this fold returning part 8 is not peeled out.

As mentioned above, by connecting the above-mentioned insert member 13 with at least one of the fold back part 7 and the fold returning part 8, the trimming off process or the adhesion process of the surface skin material 3 by hand-works as in the conventional method can advantageously be omitted. On the other hand, even when these fold back part 7 and the fold returning part 8 are formed, the connecting site of the insert member 13 is not limited to a specific site, but it can advantageously be connected with various sites in vicinity of the outer edge of the back face 5b of the above-mentioned expanded molded article in the mold pattern 5.

Furthermore, in the expanded molded article in the mold pattern having a surface skin 41 which is connected with the insert member 13 as mentioned above, since the self strength of the above-mentioned fold back part 7 or the fold returning part 8 is higher than the strength of the expanded molded article in the mold pattern 5, the strength at the connected site of this insert member 13 with the above-mentioned fold back part 7 or the like will be more increased, which is also advantageous.

As the above-mentioned insert member 13, for example, various materials which include metal, wood, FRP, thermoplastic resins such as polyethylene, polypropylene or ABS, thermosetting resins such as phenolic resins or formaldehyde resins or the like can be mentioned among others. In case that both the above-mentioned surface skin material 3 and the expanded molded article in mold pattern 5 are composed of a polyolefin resin, the insert member 13 is preferably also composed of a polyolefin resin. In such a case, like in the same as mentioned above, melt uniting of the surface skin material 3 with the expanded molded article in mold pattern 5 is harder. At the same time, the melt uniting of the insert member 13 with this surface skin material 3 and with the expanded molded article in mold pattern 5 is also harder, and on top of this, recycling can be easier, which are advantages also.

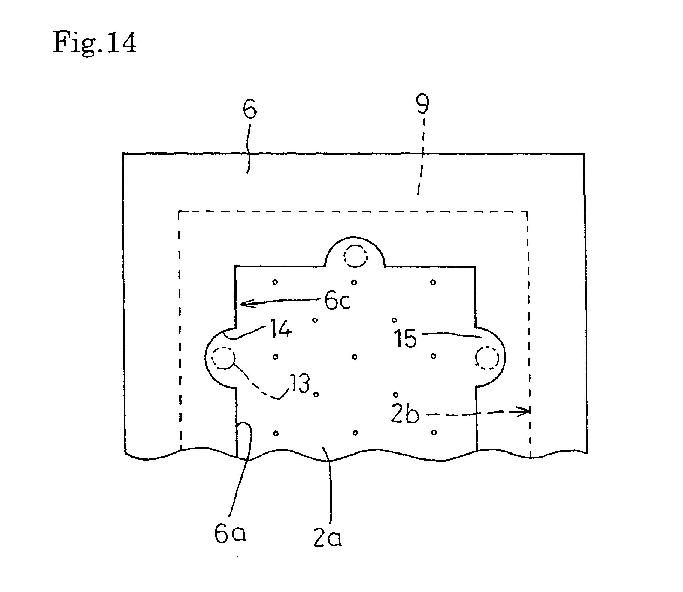

As illustrated in Fig. 14 to Fig. 17, a method for producing an expanded molded article in a mold pattern having a surface skin 51 which relates to the embodiment of example 5 resides, in the above-mentioned embodiment of example 2, in that before the above-mentioned vacuum forming (heat molding), a cutting part 14 is set up at tip 6c of the above-mentioned mold pattern for the folding back 6 in advance.

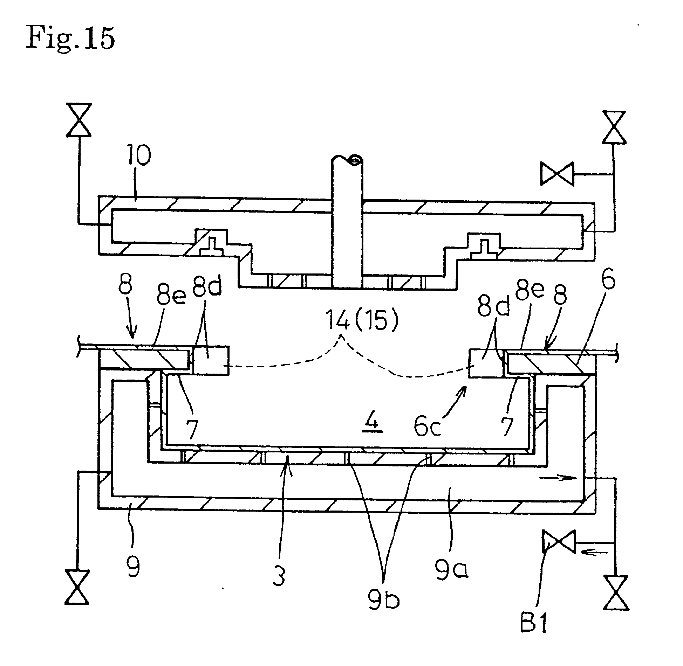

Namely, as illustrated in Fig.14, in a case wherein the cutting part for connecting the insert member 14 which is, for example, shaped to a half circle figure in plan view at tip 6c of the above-mentioned mold pattern for the folding back 6 in advance, as is illustrated in Fig. 15, when the above-mentioned vacuum forming takes place, the space of a prescribed range 15 is opened to an inward direction of this cutting part for connecting the insert member 14, the above-mentioned fold back part 7 and the fold returning part 8 can be made to fold back and to fold return.

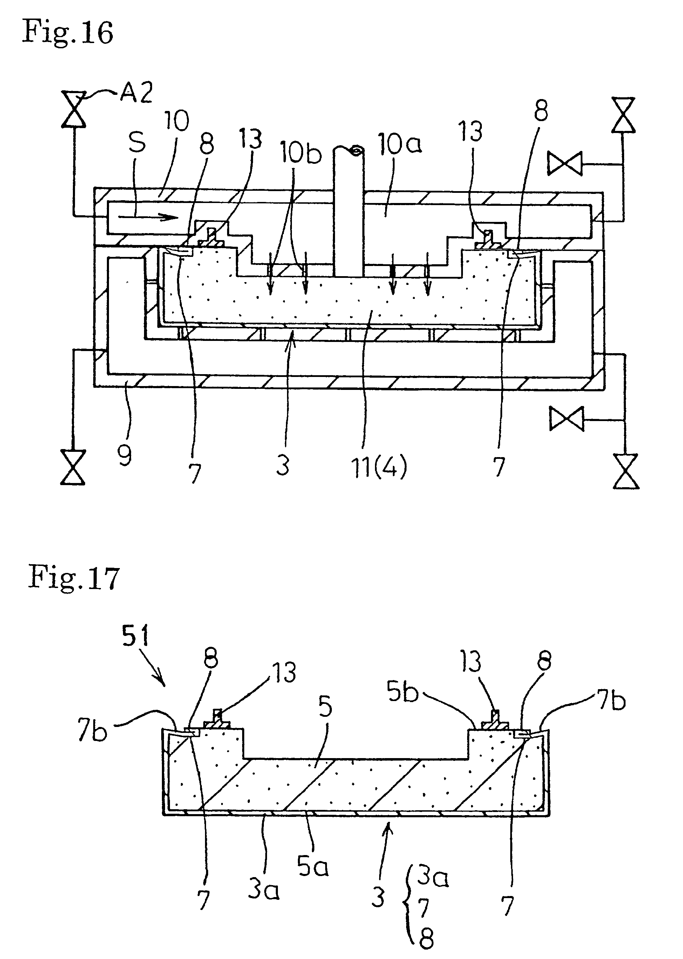

As illustrated in Fig. 16 and Fig. 17, when the expansion molding is done as mentioned above, insert member 13 can be connected with the back face 5b of the expanded molded article in the mold pattern 5 through the above-mentioned space 15.

By means of setting up the above-mentioned cutting part for the connecting insert member 14 in advance, since the fold back part 7 or the like can be formed with having the above-mentioned space 15 at the inward direction of this cutting part for the connecting insert member 14, when the insert member 13 is connected with the back face 5b of the expanded molded article in the mold pattern 5, the folding back or the like of the surface skin material 3 can be done automatically so as to avert this insert member 13, and consequently, hand-works as in conventional methods can be omitted, which is advantageous as well.

If the expanded molded article in the mold pattern having a surface skin 51 in which the fold back part 7 and the fold returning part 8 are, as mentioned above, done to fold back and to fold return so as to avert insert member 13 which is melt united to one piece with the back face 5b of the above-mentioned expanded molded article in mold pattern 5, the above-mentioned insert member 13 can be melt united to one piece with the back face 5b of the expanded molded article in mold pattern 5 so as to be buried, and as a result, the freedom of the connecting method of insert member 13 can be widened, which is advantageous as well.

Furthermore, in case that both the above-mentioned surface skin material 3 and the expanded molded article in mold pattern 5 are composed of a polyolefin resin, as mentioned above, the insert member 13 preferably is composed of a polyolefin as well. In such case, melt uniting of the surface skin material 3 with the expanded molded article in mold pattern 5 is harder, and at the same time, its recycling can advantageously be made easy, too.

In the above embodiments of example 1 to 5, although there has been described a case wherein the female mold pattern 9 is the lower mold and the male mold pattern 10 is the upper mold, the present invention is not limited to this. Said patterns may be positioned upside down of the above, or they can be placed to move in a horizontal direction for opening and clamping. In addition to this, an unevenness for a product designing pattern, such as a skin-like embossing, can be formed on the cavity face 2a of the above-mentioned female mold pattern 9 in advance, if necessary.

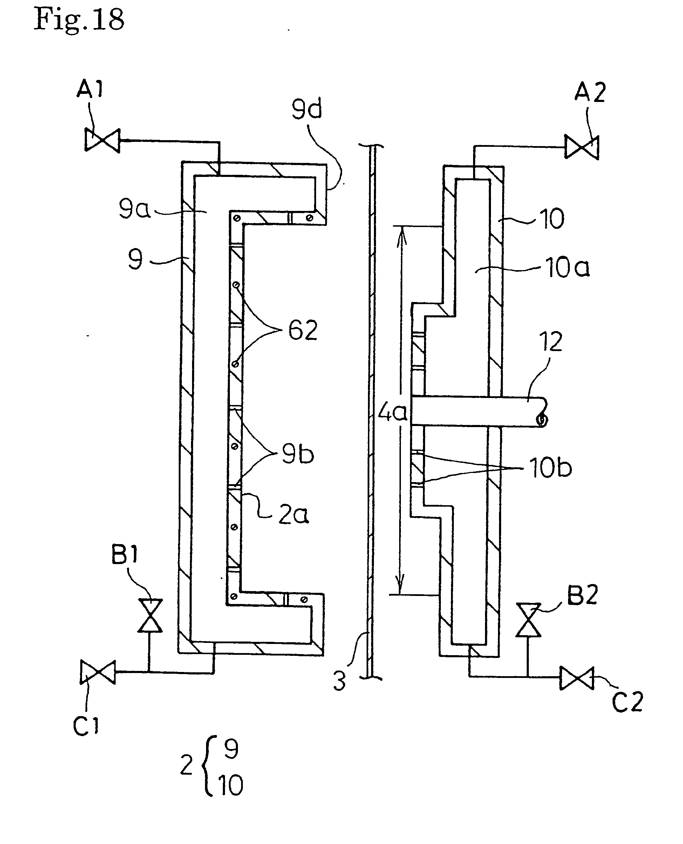

As illustrated in Fig.18 to Fig.24, a method for producing an expanded molded article in a mold pattern having a surface skin 61 which relates to the embodiment of example 6 resides in that on either one of the female pattern (metal mold) 9 and the male pattern (metal mold) 10 which are composing mold pattern 2, for example, on the above-mentioned female pattern 9, after the surface skin material 3 is placed on by vacuum forming (heat molding), for example, by expansion molding within the mold pattern 4, an expanded molded article in mold pattern 5 being formed and the above-mentioned surface skin material 3 are melt united to one piece.

This producing method resides in that on the exposed face 2a of the above-mentioned female pattern 9 forwarding inside of the above-mentioned mold pattern 4, that is, on a part which is composing the cavity face 2a in this female pattern 9, by setting up an electric heater 62, before the above-mentioned expansion molding, this cavity face 2a is pre-heated up to a prescribed temperature.

Namely, as illustrated in Fig.18 to Fig.20, at first, the above-mentioned surface skin material 3 is placed on by vacuum forming, for example.

In this occasion, the above-mentioned mold pattern 2 is composed of the female pattern 9 and the male pattern 10 which can be opened and clamped in horizontal direction, for example, and are the same as in the above-mentioned embodiments of example 1 to example 3.

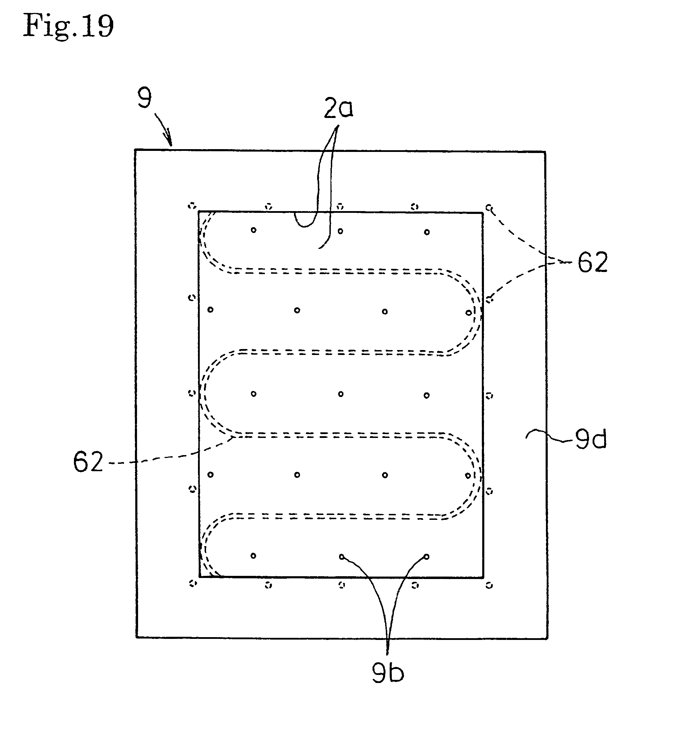

The above-mentioned electric heater 62 is, as illustrated in Fig. 19 for example, buried in a part which comprises cavity face 2a of the above-mentioned female pattern 9, in a state of meandering. A heat sensitizing measure for controlling the temperature ( heat thermocouple or the like, for example) which is not illustrated, a measure for controlling or the like (such as a thermostat and a device for controlling the electric current, for example) and other measures are also placed on the above-mentioned female pattern 9 or on any other appropriate site. By the electric heater 62, the heat sensitizing measure, the controlling measure and the like, the above-mentioned cavity face 2a can be adjusted as a whole to approximately the same temperature.

The heater is not limited to the electric heater 62 as mentioned above. For example, a heat medium heater employing heat oil, steam, heated water or the like, or such other measures can be adopted. This heat medium heater is, for example, composed of a circulation piping in which a heated medium is circulating inside, or it is composed of other components. If such a heat medium is employed, a pump for feeding said heat medium in a pressurized condition, a heating measure for heating up said heat medium, a heat sensitizing measure, a refrigerator for cooling and other components may be placed on appropriate sites.

While the above-mentioned heater such as the electric heater 62, the heat medium heater or the like may be buried, as described in this embodiment, in a part where the above-mentioned cavity 2a is provided or in another part, it may be connected with a site located on the back side of this part or the like which is located on the inside of the above-mentioned chamber 9a. Furthermore, the part for connecting this heater is not only limited to the above-mentioned cavity face 2a, but also it can be connected with, for example, the whole part which is composing the surface 9d of the female pattern 9 including this cavity face 2a, or with other parts. The importance is that by the above-mentioned heater at least the above-mentioned cavity face 2a can be pre-heated up to a prescribed temperature.

In order to place the above-mentioned surface skin material 3 on the female pattern 9, a shaped-up surface skin material which will fit to the shape of the surface 9d of this female pattern 9 in advance by vacuum forming with using other mold pattern may be placed on. However, as is in this embodiment, in case of placing it on by heat molding such as by vacuum forming, hand-works for pre-forming of it beforehand can advantageously be omitted.

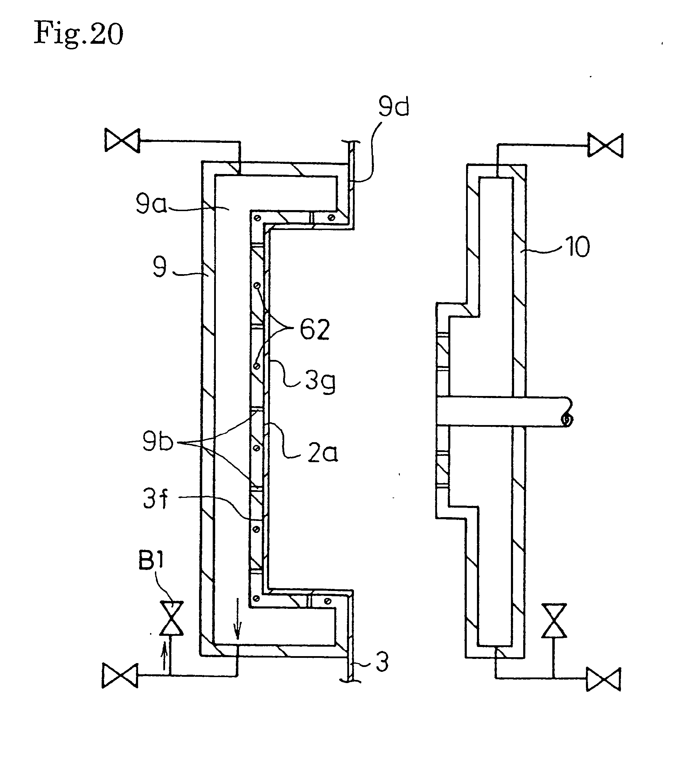

In this stage, in order to make vacuum forming as illustrated in Fig.20, as mentioned above, after the above-mentioned surface skin material 3 is contacted with the female pattern 9 in a softened state by heat in advance, valve B1 being connected to the above-mentioned chamber 9a may be opened or the like.

In this case, supposing that the above-mentioned cavity face 2a is pre-heated by the above-mentioned electric heater 62 or any other means to a prescribed temperature, this softened surface skin material 3 which will contact tightly the cavity face 2a can be minimized in its temperature lowering, and as a result, heat molding such as vacuum forming can effectively be done, which is also advantageous. And on top of that, in order to prevent the temperature lowering of the surface skin material 3 during the heat molding process, even in this heat molding process, said heating by a heater may be continued or may also be changed to a multi-step heating measure which can change its set-up temperature from a prescribed original temperature during said heat molding process.

In case of the above-mentioned surface skin material 3 being composed of a polyolefin resin, when the temperature of the cavity face 2a before said heat molding is preferably set in a range of from 60 to 150°C, more preferably from 60 to 130°C and most preferably from 70 to 120°C, since the above-mentioned surface skin material 3 can be heat-molded in an appropriate condition, the property of said product can advantageously be improved. In this stage, if the temperature of the cavity face 2a is lower than 60°C, the surface skin material 3 will not be appropriately softened, whereas if it is higher than 150°C, said surface skin material will be excessively softened. Therefore they are not preferable.

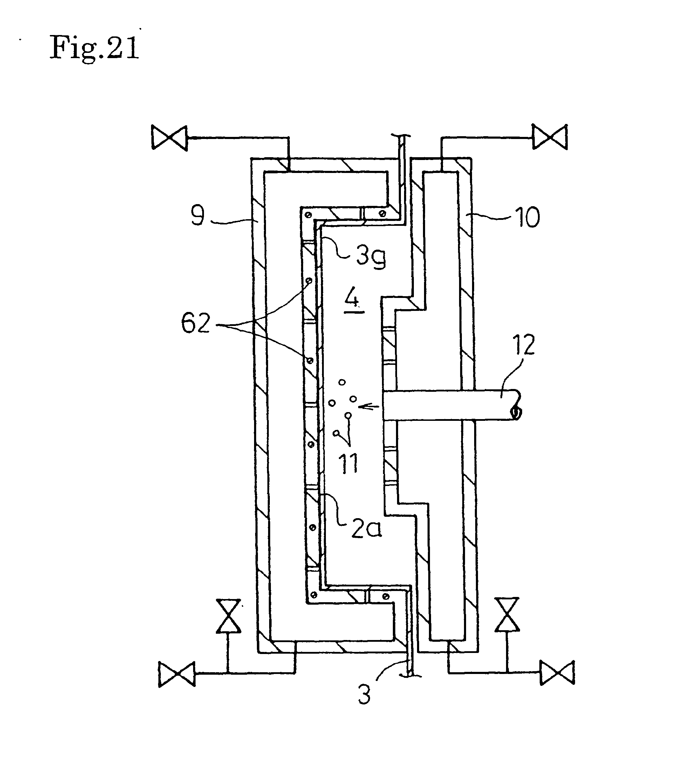

Next, as illustrated in Fig.21, after said clamping has been made, the expanded beads 11 are filled into the inside of the mold pattern 4 from feeder 12. At this stage, as mentioned above, in order to ease the evacuation of the air residing in the above-mentioned mold pattern 4, as is described in this embodiment, said clamping can be made to be in a state of opening a little gap (cracking state). In order to increase the adhesion property of the expanded molded article in the mold pattern 5, which is obtained by expansion molding in the mold pattern of said expanded beads 11, with the above-mentioned surface skin material 3, if necessary, a coating of adhesive may be done in advance on the back face 3g of said surface skin material 3, which will come to contact with the above-mentioned expanded beads 11.

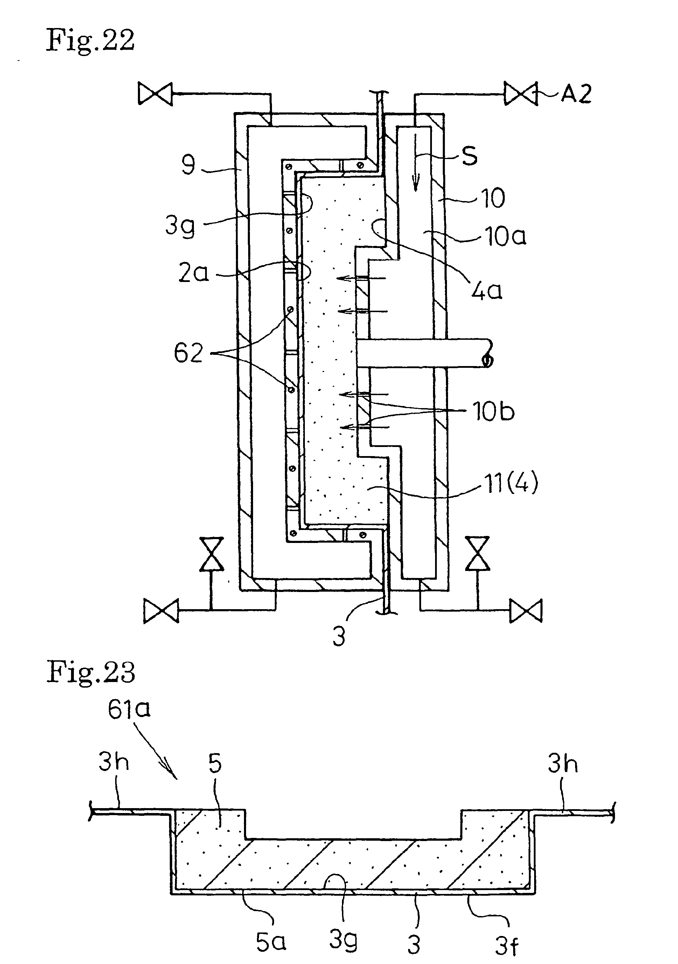

Subsequently, as illustrated in Fig.22, after clamping the mold pattern completely, vapor valve A2, which is connected to chamber 10a of the above-mentioned male pattern, is opened for feeding steam S into the inside of the mold pattern 4 from the above-mentioned vapor holes 10b so that the above mentioned expanded beads 11 are heat-expanded. At this stage, the above-mentioned cavity face 2a may be preheated by the above-mentioned electric heater 62 or the like before the heat expansion molding. However, in order to shorten said molding cycle, this preheating is preferably done in advance before feeding the expanded beads 11.

As is described above, by means of preheating of the above-mentioned cavity face 2a by a heater, the surface skin material 3 having been placed on said cavity face 2a is simultaneously preheated up to a prescribed temperature therewith. As a result, the expansion molding, namely, the melt uniting of the surface skin material 3 with the expanded beads 11, which will be expanded by the expansion molding in the mold pattern, can more effectively be done, which is advantageous as well. Furthermore, since the heating of only the above-mentioned cavity face can be done without heating the whole female pattern 9 as in the conventional method, the heat efficiency is also advantageously improved. Since moisture or water drops will not remain on said cavity face 2a even when the preheating of the above-mentioned cavity face 2a is done, the surface appearance of the surface skin material 3 can be improved, and at the same time, as it is in this embodiment, since that surface skin material 3 is placed on the female pattern by heat molding such as vacuum forming, the elongation at the time of its heat molding can also be improved, which is also advantageous. Furthermore, in order to prevent a temperature lowering of the above-mentioned cavity face 2a during the expansion molding process, as mentioned above, the heating by a heater during the expansion molding process may be continued, or a multi-step heating which can change its set-up temperature from an original set-up temperature may be done as well.

On top of these, in a case wherein the above-mentioned surface skin material 3 and the expanded molded article in the mold pattern 5 are composed of polyolefin resin, the melt uniting of these surface skin material 3 and the expanded molded article in the mold pattern 5 can be made harder, and at the same time, since said cellular molded article in the mold pattern having a surface skin 61 to be obtained consists of a so-called all polyolefin, its recycling can easily be done, which is advantageous as well. In addition to this, if the above-mentioned cavity face 2a is prepared to be in a range of 60 to 150°C in advance, as mentioned above, since the surface skin material 3 which is placed on the cavity face 2a will come into an appropriate softened state, the melt uniting of the surface skin material 3 with the expanded beads 11 can more effectively be done as well.

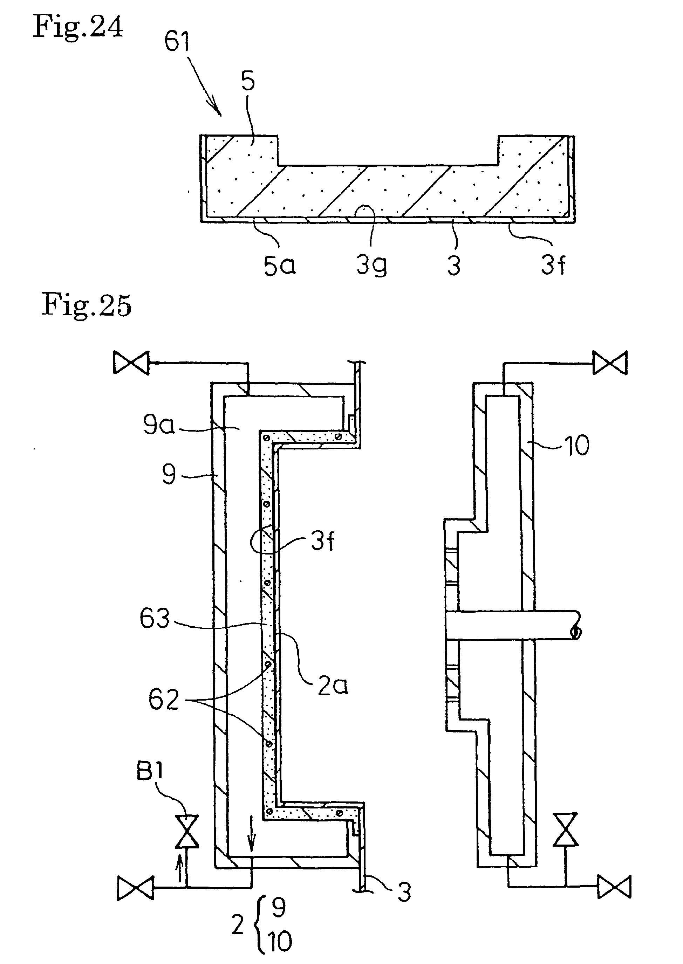

After the cooling as required, by opening of the above-mentioned mold pattern 2 and by taking out from said mold pattern, as is illustrated in Fig.23, the expanded molded article in the mold pattern having a surface skin 61a, which comprises the expanded molded article in the mold pattern 5 having been obtained by the above-mentioned expansion molding in the mold pattern of the expanded beads 11, and the surface skin material 3 having an edge part 3h, which has been melt united to one piece with the surface 5a of said expanded molded article in the mold pattern 5, can be obtained. By trimming off the above-mentioned edge part 3h, the expanded molded article in the mold pattern having a surface skin 61 as illustrated in Fig.24 can be obtained.

As illustrated in Fig.25, a method for producing an expanded molded article in a mold pattern having a surface skin 61, which relates to the embodiment of example 7 resides in the above-mentioned embodiment of example 6, a part which includes the above-mentioned cavity face 2a comprises the using of a gas permeable electric cast mold pattern 63, for example.

The above-mentioned gas permeable electric cast mold pattern 63 has minute gas permeable holes, which are connected with the above-mentioned chamber 9a, on its whole or on a prescribed portion of the cavity face 2a. Such mold pattern may be produced by a nickel electric cast or the like, for example (e.g. POROUS DENCHU; trade name, made by KONAN TOKUSYU SANGYO Co.,Ltd.).

Thus, since the above-mentioned gas permeable electric cast mold 63 has minute gas permeable holes on the whole cavity face 2a or on a prescribed portion of it, as mentioned above, when the above-mentioned surface skin material 3 is placed on by vacuum forming, the evacuation of air or gas residing between this gas permeable electric cast mold 63 and the surface skin material 3 can more effectively be done. By this reason, the above-mentioned surface skin material 3 can more surely be contacted with the cavity face 2a, and at the same time, since the diameter of the above-mentioned gas permeable holes is so small in a range of from about some tens to some hundreds of *µ*m, the advantage is also that marks of these gas permeable holes are not printed on the surface 3f of the above-mentioned surface skin material 3.

In place of the above-mentioned gas permeable electric cast mold 63, a gas permeable metal mold or a gas permeable ceramic mold (e.g. Porcerax II; trade name, made by SINTOKOGYO,LTD.) having minute gas permeable holes of about some µm of diameter on the whole cavity face 2a, obtained by sintering metal or ceramic particles under a prescribed condition, can be used. Alternatively, a gas permeable metal mold or a gas permeable ceramic mold having minute gas permeable holes with a diameter of not more than 0.4 mm or so, preferably not more than 0.2 mm, which are mechanically made by drilling or the like can be used.

As is described above, in the embodiments of example 6 and example 7, there has been described a case wherein one of metal mold patterns on which the above-mentioned surface skin material 3 is placed is a female pattern 9. However, the present invention is not limited to this case. A case wherein the above-mentioned one metal mold pattern 10 is a male pattern and the other metal mold pattern is a female pattern 9 can be adopted as well. In this case, the above-mentioned heater such as an electric heater 62, as it is illustrated in Fig. 18, can be connected with a part of the above-mentioned male pattern 10 which consists of at least the exposed face 4a toward the inside of the above-mentioned mold pattern 4.

The above-mentioned mold pattern 2 can, besides with a horizontal motion, also be opened and clamped with a vertical motion as described in the embodiments of example 1 to example 5, or the above-mentioned fold back part 7, the fold returning part 8 and the like can be formed by using the above-mentioned mold pattern for the folding back 6.

Further, on the surface 3f of the above-mentioned surface skin material 3, an unevenness for a product design pattern such as a skin-like embossing may be formed in advance. However, when this embossing is formed on the exposed face 2a (4a) toward the inside of the mold pattern of the above-mentioned one metal mold pattern in advance, at the time of placing the surface skin material 3 on one of the metal mold patterns by heat molding such as the above-mentioned vacuum forming, since the above-mentioned unevenness for the product design pattern can be printed on the surface 3f of said surface skin material 3, hand-works for this can advantageously be omitted. Additionally, said unevenness for the product design pattern can be formed by using various conventional methods such as etching or printing from other mold patterns.

The present invention will be further illustrated by the following examples. However, the scope of the invention is not limited to these examples.

### EXAMPLES 1 to 5

With a female mold pattern part and a male mold pattern part which formed a mold pattern, after the placement of a surface skin material on the above-mentioned female mold pattern by vacuum forming, the expansion molding was carried out within this mold pattern. In the inside of a part which comprised a cavity face of the above-mentioned female pattern, a piping for leading a heating medium was formed in a state of meandering, and by leading steam into this stream pipe the cavity face was kept at a temperature as shown in the Table below. To the above-mentioned male pattern, vapor holes for feeding steam into the inside of the mold pattern and a feeder for filling expanded beads were mounted.

In this stage, a polyolefin thermoplastic resin sheet (TPO sheet) was employed as the above-mentioned surface skin material, and then, after heat softening thereof, it was placed on the above-mentioned female mold pattern and formed by vacuum pumping. EPERAN-PP (trade name, made by KANEKA CORPORATION, expansion ratio was 15 times, imparted with 2 kg/cm² of inner pressure in advance by using air pressure in an autoclave) was used for the expanded beads, and after the clamping said expanded beads were charged into the inside of said mold pattern through the above-mentioned feeder.

After filling of said expanded beads, preheating was carried out by feeding steam (vapor pressure, 1.47 bar G, 1.5 Kg/cm² G) into the inside of said mold pattern through the above-mentioned vapor holes being formed in said male mold pattern. Then, after steaming of these expanded beads, drain and steam residing there were removed by low pressure. After heating up by feeding steam (vapor pressure, 3.13~3.62 bar G, 3.2~3.7 Kg/cm² G) again through the above-mentioned vapor holes, it was cooled by water, and a cellular molded article in the mold pattern having a surface skin was obtained. The cooling of the male mold pattern at the time of the above-mentioned water cooling was carried out by leading of cooled water into the above-mentioned stream piping.

### COMPARATIVE EXAMPLES 1 to 3

An expanded molded article in a mold pattern having a surface skin was obtained as in Examples 1 to 5 except that the cavity face of said female mold pattern was kept at a temperature shown in the Table by feeding of steam into the inside of the chamber of a female mold pattern which was not formed with the above-mentioned stream piping.

In the above-mentioned Examples 1 to 5 and Comparative Examples 1 to 3, just before the vacuum forming of said surface skin material, the presence or non-presence of water wetting the cavity face of said female mold pattern was observed. By observation of said expanded molded article in the mold pattern having a surface skin which had been obtained, each of them was evaluated according to an evaluation standard shown below. The results are shown in the following Table .

### EVALUATION STANDARD

⊚ : The product design pattern of the metal mold was clearly printed on.
○ : The product design pattern of the metal mold was almost printed on.
Δ: Although the product design pattern was printed on, a lacking part was observed.
× : The product design pattern was not printed on at all.

**Table**

| | temperature of cavity face of female mold pattern (°C) | | water wet on cavity face of female mold pattern | evaluation result of surface property |
|---|---|---|---|---|
| | at vacuum forming of surface skin material | at expansion molding | | |
| Ex-1 | 60 | 60 | no | O |
| Ex-2 | 80 | 80 | no | ⊚ |
| Ex-3 | 110 | 110 | no | ⊚ |
| Ex-4 | 80 | 110 | no | ⊚ |
| Ex-5 | 110 | 80 | no | ⊚ |
| C-Ex-1 | 50 | 50 | yes | × |
| C-Ex-2 | 80 | 80 | yes | Δ~× |
| C-Ex-3 | 110 | 110 | yes | Δ |

### POSSIBILITY FOR INDUSTRIAL USE

As described above, a method for producing a cellular molded article in a mold pattern having a surface skin and a molded article therefrom which relate to the present invention are useful for an automobile interior trim material or the like. They are particularly useful for producing an automobile interior trim material having the following advantages, among others :
(1) A fold back part, which is folded back toward the back side of an expanded molded article in the mold pattern and which is melt united to one piece therewith, is hardly peeled out;
(2) Even in case of assembling an insert member, hand-works for it will be reduced;
(3) The expansion molding or the heat molding of the surface skin material can more effectively be done;
(4) The surface appearance of the surface skin material or the elongation property at the heat molding can be improved;
(5) A good heat efficiency where preheating the metal mold on which a surface skin material will be placed.

## Claims

1. Method for producing a cellular molded article with a surface skin in a mold pattern, wherein the surface skin material (3) is melt united to one piece with a surface of an expanded molded article in a mold pattern, which expanded molded article is molded by expansion molding within said mold pattern, after the surface skin material is heat-formed along the cavity face (2a) of the mold pattern (2), **characterized in that**, when carrying out said heat-forming, after the outer edge part of said surface skin material is folded back to the inside direction and formed to a fold back part (7) along a pattern for folding back (6) which is arranged as an opening edge (2b) of the above-mentioned cavity face (2a) to project to the inside direction, and then the above-mentioned pattern for folding back is removed, thereafter at the time of said expansion molding one face of said fold back part is melt united to one piece with a back face (5b) of an expanded molded article (5) in a mold pattern, as well as the fold returning part (8), which is in a state wherein the outer edge part of the surface skin material is folded back to the out-side direction from the tip (7c) of said fold back part, is pressed so as to pile on the other face of said fold back part (7).

2. Method according to claim 1, wherein, when heat-molding, said fold returning part is pre-formed beforehand to a state in which it is folded back to the outer direction in a manner of rolling up the pattern for folding back from the tip (7c) of said fold back part.

3. Method according to claim 1 or 2, wherein the outer part of said surface skin material is trimmed beforehand so that the tip (7c) of the fold returning part (8) is positioned to the inside direction from the edge of the fold back part.

4. Method according to any of claims 1 to 3, wherein the angle between the cavity face and the pattern for folding back at said opening edge is set up larger beforehand than the outer corner angle of the backside face of said above-mentioned expanded molded article in the mold pattern.

5. Method according to any of claims 1 to 4, wherein at the time of said expansion molding an insert member (13) is connected with at least one of the fold back part (7) and the fold returning part (8).

6. Method according to any of claims 1 to 4, wherein before said heat molding a cut off part for setting up the insert member at the tip of said pattern for folding back is prepared.

7. Cellular molded article with an expanded molded article in a mold pattern and a surface skin material (3), comprising a surface part which is melt united to one piece with a surface of the said expanded molded article in a mold pattern, a fold back part (7) in which the edge part of said surface part is folded back to the inside direction and of which one face is melt united to one piece with the backside (5b) of said expanded molded article (5) in the mold pattern, and a fold returning part which is folded to return in such a manner that it piles on the other face (7b) of the fold back part from the tip (7c) of said fold back part (7) to the outside direction and at the same time in a manner that its tip is positioned to the inside direction from the base edge of the fold back part (7).

8. Cellular molded article according to claim 7, wherein said fold returning part is melt united to one piece with the other face of the fold back part.

9. Cellular molded article according to claim 7 or 8, wherein an insert member is united with at least one of said fold back part and fold returning part.

10. Cellular molded article according to claim 7 or 8, wherein the above-mentioned fold back part and the fold returning part are folded back and folded to return in such a manner to avert the insert member which is melt united to one piece with the backside of said expanded molded article in the mold pattern.

11. Cellular molded article according to claim 7 or 8, wherein said surface skin material and said expanded molded article in the mold pattern consist of a polyolefin resin.

12. Cellular molded article according to claim 9 or 10, wherein said surface skin material, said expanded molded article in the mold pattern and said insert member consist of a polyolefin resin.

## Patentansprüche

1. Verfahren zum Herstellen eines zelligen Formkörpers mit einer Oberflächenhaut in einem Formmodell, wobei die Oberflächenhaut (3) in der Schmelze mit einer Oberfläche eines expandierten Formkörpers in einem Formmodell zu einem Stück verbunden wird und der expandierte Formkörper durch Expansionsformen in dem genannten Formmodell gebildet wird, nachdem das Oberflächenhautmaterial entlang der Hohlraumfläche (2a) des Formmodells (2) in der Wärme erzeugt worden ist, **dadurch gekennzeichnet, daß** dann, wenn das genannte Erzeugen in der Wärme durchgeführt wird, nachdem der äußere Randteil des genannten Oberflächenhautmaterials in Richtung zur Innenseite zurückgefaltet und zu einem zurückgefalteten Teil (7) entlang einer Schablone (6) zum Zurückfalten ausgebildet worden ist, die als Öffnungsrand (2b) der vorgenannten Hohlraumfläche (2a) angeordnet ist, um zur Innenseite hin vorzuragen, und dann die vorgenannte Schablone zum Zurückfalten entfernt wird, anschließend zur Zeit des genannten Expansionsformens eine Seite des zurückgefaltenen Teils mit der Rückseite (5b) eines expandierten Formkörpers (5) in einem Formmodell in der Schmelze zu einem Stück verbunden wird sowie der gefaltete zurückkehrende Teil (8), der sich in einen Zustand befindet, in dem der äußere Randteil des Oberflächenhautmaterials von der Spitze (7c) des genannten zurückgefaltenen Teils zur Außenseite hin zurückgefaltet wird, derart gepreßt wird, daß er auf der anderen Seite des genannten zurückgefalteten Teils (7) aufliegt.

2. Verfahren nach Anspruch 1, worin beim Formen in der Wärme der gefaltete zurückkehrende Teil im Voraus in einen Zustand vorgeformt wird, in dem er in Richtung nach außen in einer Weise zurückgefaltet wird, bei der die Schablone zum Zurückfalten von der Spitze (7c) des zurückgefalteten Teils aufgerollt wird.

3. Verfahren nach Anspruch 1 oder 2, worin der äußere Teil des Oberflächenhautmaterials vorher derart beschnitten wird, daß die Spitze (7c) des gefalteten zurückkehrenden Teils (8) vom Rand des zurückgefalteten Teils in Richtung zur Innenseite angeordnet wird.

4. Verfahren nach einem der Ansprüche 1 bis 3, worin der Winkel zwischen der Hohlraumfläche und der Schablone für das Zurückfalten an dem genannten Öffnungsrand im Voraus größer eingestellt wird als der Winkel der Außenecke der Rückseitenfläche des vorgenannten expandierten Formkörpers in dem Formmodell.

5. Verfahren nach einem der Ansprüche 1 bis 4, worin zu der Zeit des Expansionsformens ein Einsetzelement (13) mit mindestens dem zurückgefalteten Teil (7) oder dem gefalteten zurückkehrenden Teil (8) verbunden wird.

6. Verfahren nach einem der Ansprüche 1 bis 4, worin vor dem genannten Formen in der Wärme ein Abtrennteil zum Einrichten des Einsetzelements an der Spitze des genannten Formmodells zum Rückfalten ausgebildet wird.

7. Zelliger Formkörper, der einen expandierten Formkörper in einem Formmodell und ein Oberflächenhautmaterial (3) aufweist, mit einem Oberflächenteil, der mit einer Oberfläche des genannten expandierten Formkörpers in dem Formmodell zu einem Stück in der Schmelze verbunden ist, einem zurückgefalteten Teil (7), bei dem der Randteil des genannten Oberflächenteils in Richtung zur Innenseite zurückgefaltet ist und von dem eine Fläche mit der Rückseite (5b) des genannten expandierten Formkörpers (5) in dem Formmodell in der Schmelze zu einem Stück verbunden ist, und mit einem gefalteten zurückkehrenden Teil, der gefaltet ist, um in einer solchen Weise zurückzukehren, daß er von der Spitze (7c) des genannten zurückgefalteten Teils (7) in Richtung zur Außenseite über der anderen Seite (7b) des zurückgefalteten Teils liegt, und dies gleichzeitig in einer solchen Weise geschehen ist, daß seine Spitze vom Basisrand des zurückgefalteten Teils (7) in Richtung zur Innenseite hin angeordnet ist.

8. Zelliger Formkörper nach Anspruch 7, worin der genannte gefaltete zurückkehrende Teil mit der anderen Seite des zurückgefalteten Teils in der Schmelze verbunden ist.

9. Zelliger Formkörper nach Anspruch 7 oder 8, worin ein Einsetzelement mit mindestens dem zurückgefalteten Teil oder dem gefalteten zurückkehrenden Teil verbunden ist.

10. Zelliger Formkörper nach Anspruch 7 oder 8, worin der vorgenannte zurückgefaltete Teil und der gefaltete zurückkehrende Teil in einer solchen Weise zurückgefaltet und zum Zurückkehren gefaltet sind, daß das Einsetzelement vermieden wird, das mit der Rückseite des genannten expandierten Formkörpers in dem Formmodell in der Schmelze zu einem Stück verbunden ist.

11. Zelliger Formkörper nach Anspruch 7 oder 8, worin das Oberflächenhautmaterial und der expandierte Formkörper in dem Formmodell aus einem Polyolefinharz bestehen.

12. Zelliger Formkörper nach Anspruch 9 oder 10, worin das Oberflächenhautmaterial, der expandierte Formkörper in dem Formmodell und das Einsetzelement aus einem Polyolefinharz bestehen.

## Revendications

1. Procédé de production d'un article moulé cellulaire avec une pellicule de surface dans un motif de moule, dans lequel le matériau de pellicule de surface (3) est uni en fusion solidairement avec une surface d'un article moulé par dilatation en un motif de moule, lequel article moulé par dilatation est moulé par moulage par dilation au sein dudit motif de moule, après que le matériau de pellicule de surface est thermo formé le long de la face de cavité (2a) du motif de moule (2), **caractérisé en ce que**, lors de la réalisation dudit thermo formage, après que la partie de bord externe dudit matériau de pellicule de surface est repliée vers la direction intérieure et formée en une partie de repliage (7) le long d'un motif pour repliage (6) qui est agencé comme un bord d'ouverture (2b) de la face de cavité (2a) précitée pour faire saillie vers la direction intérieure, puis que le motif mentionné ci-dessus pour repliage est retiré, alors au moment dudit moulage par dilatation, une face de ladite partie de repliage est unie en fusion solidairement avec une face arrière (5b) d'un article moulé par dilatation (5) dans un motif de moule, de même que la partie de retour de pli (8), qui est dans un état dans lequel la partie de bord externe du matériau de pellicule de surface est repliée vers la direction extérieure à partir de l'embout (7c) de ladite partie de repliage, est pressée de façon à s'empiler sur l'autre face de ladite partie de repliage (7).

2. Procédé selon la revendication 1, dans lequel, lors du thermo moulage, ladite partie de retour de pli est pré-formée au préalable dans un état dans lequel elle est repliée dans la direction externe de manière à enrouler le motif pour repliage à partir de l'embout (7c) de ladite partie de repliage.

3. Procédé selon la revendication 1 ou 2, dans lequel la partie externe dudit matériau de pellicule de surface est amincie au préalable de sorte que l'embout (7c) de la partie de retour de pli (8) est positionné vers la direction intérieure à partir du bord de la partie de repliage.

4. Procédé selon l'une quelconque des revendications 1 à 3, dans lequel l'angle entre la face de cavité et le motif pour repliage au niveau dudit bord d'ouverture est fixé plus grand au préalable que l'angle de coin externe de la face arrière dudit article moulé par dilatation mentionné ci-dessus dans le motif de moule.

5. Procédé selon l'une quelconque des revendications 1 à 4, dans lequel au moment dudit moulage par dilatation,un organe d'insert (13) est relié à au moins l'une parmi la partie de repliage (7) et la partie de retour de pli (8).

6. Procédé selon l'une quelconque des revendications 1 à 4, dans lequel avant ledit thermo moulage, une partie de découpe pour fixer l'organe d'insert au niveau de l'embout dudit motif pour repliage est préparée.

7. Article moulé cellulaire avec un article moulé par dilatation dans un motif de moule et un matériau de pellicule de surface (3), comprenant une partie de surface qui est unie en fusion solidairement avec une surface dudit article moulé par dilatation dans un motif de moule, une partie de repliage (7) dans laquelle la partie de bord de ladite partie de surface est repliée vers la direction intérieure et dont une face est unie en fusion solidairement avec l'arrière (5b) dudit article moulé par dilatation (5), dans le motif de moule, et une partie de retour de pli qui est pliée pour retourner de telle manière qu'elle s'empile sur l'autre face (7b) de la partie de repliage à partir de l'embout (7c) de ladite partie de repliage (7) vers la direction extérieure et, dans le même temps, de manière telle que son embout soit positionné vers la direction intérieure à partir du bord de base de la partie de repliage (7).

8. Article moulé cellulaire selon la revendication 7, dans lequel ladite partie de retour de pli est unie en fusion solidairement avec l'autre face de la partie de repliage.

9. Article moulé cellulaire selon la revendication 7 ou 8, dans lequel un organe d'insert est uni avec au moins l'une parmi ladite partie de repliage et ladite partie de retour de pli.

10. Article moulé cellulaire selon la revendication 7 ou 8, dans lequel la partie de repliage et la partie de retour de pli précitées sont repliées et pliées en retour de manière telle à éviter l'organe d'insert qui est uni en fusion solidairement avec l'arrière dudit article moulé par dilatation dans le motif de moule.

11. Article moulé cellulaire selon la revendication 7 ou 8, dans lequel ledit matériau de pellicule de surface et ledit article moulé par dilatation dans le motif de moule consistent en une résine de poly(oléfine).

12. Article moulé cellulaire selon la revendication 9 ou 10, dans lequel ledit matériau de pellicule de surface, ledit article moulé par dilatation dans le motif de moule et ledit organe d'insert consistent en une résine de poly(oléfine).
